# EUROPEAN PATENT SPECIFICATION

(11) **EP 2 443 427 B1**
(45) Date of publication and mention of the grant of the patent: **02.04.2014**
(21) Application number: 10790223.1
(22) Date of filing: 17.06.2010
(51) Int. Cl.: G01N 21/64, G01N 15/14

(54) **METHOD AND APPARATUS FOR QUANTITATIVE MICROIMAGING**
VERFAHREN UND VORRICHTUNG ZUR QUANTITATIVEN MIKROABBILDUNG
PROCÉDÉ ET APPAREIL DE MICRO-IMAGERIE QUANTITATIVE

(30) Priority: 17.06.2009 US 187669 P; 24.06.2009 US 220002 P
(43) Date of publication of application: 25.04.2012
(73) Proprietor: Ingeneron, Inc., Houston, TX 77054 (US); Board of Regents, The University of Texas System, Austin, TX 78701 (US)
(72) Inventor: VYKOUKAL, Jody, Houston, TX 77098 (US); VYKOUKAL, Daynene, M., Houston, TX 77098 (US); STONE, Gregory P., Houston, TX 77092 (US); ALT, Eckhard, U., Houston, TX 77019 (US)
(74) Representative: Ehnis, Tobias
(86) International application number: PCT/US2010/039082
(87) International publication number: WO 2010/148252

(56) References cited:
- WO-A2-2008/066747
- US-A1- 2003 157 581
- US-A1- 2008 050 347
- US-B2- 7 316 899
- SANGJUN MOON ET AL: "Integrating microfluidics and lensless imaging for point-of-care testing", BIOENGINEERING CONFERENCE, 2009 IEEE 35TH ANNUAL NORTHEAST, IEEE, PISCATAWAY, NJ, USA, 3 April 2009 (2009-04-03), pages 1-2, XP031460607, ISBN: 978-1-4244-4362-8
- X. CUI ET AL: "Lensless high-resolution on-chip optofluidic microscopes for Caenorhabditis elegans and cell imaging", PROCEEDINGS OF THE NATIONAL ACADEMY OF SCIENCES, vol. 105, no. 31, 5 August 2008 (2008-08-05), pages 10670-10675, XP055051173, ISSN: 0027-8424, DOI: 10.1073/pnas.0804612105
- LANGE D ET AL: "A microfluidic shadow imaging system for the study of the nematode Caenorhabditis elegans in space", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 107, no. 2, 29 June 2005 (2005-06-29) , pages 904-914, XP027810555, ISSN: 0925-4005 [retrieved on 2005-06-29]
- AYDOGAN OZCAN ET AL: "Ultra wide-field lens-free monitoring of cells on-chip", LAB ON A CHIP, vol. 8, no. 1, 1 January 2008 (2008-01-01) , page 98, XP055051174, ISSN: 1473-0197, DOI: 10.1039/b713695a
- SUNGKYUO S E ET AL: "Lensfree holographic imaging for on-chip cytometry and diagnostic", LAB ON A CHIP, ROYAL SOCIETY OF CHEMISTRY, vol. 9, 1 January 2009 (2009-01-01), pages 777-787, XP002582445, ISSN: 1473-0197, DOI: 10.1039/B813943A [retrieved on 2008-12-05]

## Description

### FIELD OF THE INVENTION

This invention relates to lab-on-a-chip type imaging and assays and methods for both qualitative and quantitative optical detection and microimaging.

### BACKGROUND OF THE INVENTION

Without limiting the scope of the invention, its background is described in connection with existing microimaging apparatus and uses thereof. Although inexpensive, portable point-of-need assay systems would have immediate applications in clinical diagnostics, global health, environmental monitoring, and forensics, few commercial examples presently exist.

In clinical and industrial laboratory analyses, the most widely used and generally accepted methods to quantify particulate, chemical or biochemical analytes employ optical detection approaches based on absorbance, fluorescence or luminescence. Continuing advances in microfluidics have enabled the demonstration of prototype lab on a chip devices that offer to decentralize and improve access to chemical and biological sample analysis through the introduction of low-cost, portable point of need assay systems. *See* Myers FB, Lee LP. "Innovations in optical microfluidic technologies for point-of-care diagnostics" Lab Chip.8 (2008) 2015-2031; Whitesides GM. "The origins and the future of microfluidics" Nature.442 (2006) 368-373. However, while microfluidic implementations of optical methods have been demonstrated, detection is typically achieved off-chip using conventional microscope optics and digital camera systems or custom and relatively expensive chip-scale prototype optoelectronics.

Since the introduction of the first commercial flow-cytometer in the late 1960s, optical flow cytometry using fluorescent tags has emerged as the primary method for the automated analysis of large numbers of cells or other particles in both clinical and research environments. The advent of fluorochrome-linked probes that specifically label biomarkers on the cell surface or within a cell has greatly expanded the analysis capabilities and utility of the approach. In addition to biomarker labeling, fluorescent cytoplasmic or nuclear stains are used to investigate membrane potential, pH, enzyme activity or DNA content using flow cytometry. Rather than providing an ensemble measurement on a population, flow cytometry provides for characterization of cells individually and can reveal information about subpopulations and rare cell types. The method is routinely employed clinically for platelet analysis, determining CD4+/CD8+ lymphocyte ratios in patients with HIV, quantitation of CD34+ hematopoietic stem cells in autologous bone marrow transplant patients, and immunophenotyping of acute and chronic leukemias. Flow cytometric methods also exist for leukocyte differential counting and for enumeration of microorganisms or pathogens in patient, environmental or food samples. In the last 50 years, cytometer instrumentation has increased in complexity and instruments are configured with as many as four separate lasers and multiple detectors for simultaneous evaluation of two scatter parameters and as many as thirteen fluorescent parameters (BD FACSAria II cell sorter, BD Biosciences).

Typical flow cytometers utilize hydrodynamic sheath flow and a complex fluid control system to focus particles into a well defined stream for automated optical analysis of single particles. Such instruments are bench-top sized and typically located in core labs or other centralized facilities. They require significant infrastructure and resources to purchase and maintain and are dependent on skilled technical personnel for their operation. Recently, it has become increasingly evident that a general need exists for inexpensive, portable and easy to operate point-of-use diagnostic and on-site analysis instruments that can be used in physicians' offices, homes and resource-poor settings such as those found in the developing world. Accordingly, a number of groups are seeking to develop compact, reduced-cost microfluidic flow cytometers for the analysis of cells and other particles. Several key innovations in the use of micromolded polydimethylsiloxane (PDMS), photopolymers, and thin film materials to produce integrated microscale optical components such as waveguides, lensing arrays, and optical filters have recently been described. *See e.g.* Ateya DA, et al. "The good, the bad, and the tiny: a review of microflow cytometry. Anal Bioanal Chem 391(5) (2008) 1485-1498.

Dielectrophoresis-based particle focusing for no sheath flow microflow cytometry applications has been demonstrated as an alternative to the cumbersome fluidics of convention flow cytometry. *See* Yu CH, Vykoukal J; Vykoukal DM, Schwartz JA, Shi L, Gascoyne PRC. "A three-dimensional dielectrophoretic particle focusing channel for microcytometry applications" Journal of microelectromechanical Systems 14(3) (2005) 480-487; Holmes D, Morgan H, Green NG. "High throughput particle analysis: Combining dielectrophoretic particle focusing with confocal optical detection" Biosensors & Bioelectronics 21(8) (2006) 1621-1630.

CCD cameras and custom CMOS arrays have been described for optical detection in miniaturized flow-based cytometers, but non-integrated photomultiplier tubes (PMTs) and avalanche photodiodes (APDs) are currently more widely employed for this purpose. Most of the development work in the microflow cytometer field has been directed towards realizing miniaturized implementations of existing flow cytometer design concepts. Chung TD, Kim HC. "Recent advances in miniaturized microfluidic flow cytometry for clinical use" Electrophoresis 28(24) (2007) 4511-4520, These designs almost uniformly employ hydrodynamic sheath flows to focus particles in microchannels, and many use fluidic control and optical detectors that are off-chip.

Thus, translation of optical analysis methods into truly portable total analysis systems and methods has been hindered by a lack of reasonably priced, sensitive and compact detectors that can easily be integrated with microscale sample handling and processing. A significant need exists for appropriately scaled imaging and assay quantification solutions for lab-on-a-chip devices.

From SangJun Moon et al.: "Integrating microfluidics and lensless imaging for point-of-care testing", Bioengineering Conference, 2009 IEEE 35th Annual Northeast, IEEE, Piscataway, NJ, USA, pages 1 - 2, an integrated platform that merges a microfluidic chip with lens-less imaging to target CD4⁺ T-lymphocyte counts for point-of-care testing at resource-limited settings is known. The captured cells were detected through an optically clear chip using a charge coupled device (CCD) sensor by lens-less shadow imaging techniques. A schematic view of a CCD imaging platform shows a light source above the microfluidic chamber in which the captured cells are located and a CCD imaging sensor below a cover glass which supports a microfluidic chip. The cell membranes of CD4⁺ lymphocytes diffract and transmit light and a shadow image of the captured CD4⁺ T-lymphocytes generated by diffraction is imaged on the CCD through the cover glass slip by lens-less CCD imaging.

### BRIEF SUMMARY OF THE INVENTION

In one embodiment of the invention, truly portable, low-cost, and easy to operate microscale analysis systems are provided by adapting digital image sensors as quantitative optical detectors in a microfluidic assay system. In one embodiment, static contact images of biomarker-labeled cell populations are analyzed using digital image processing to identify and count individual target cells. By eliminating the need for sheath flows and dynamic particle focusing, the cytometer design is greatly simplified. Quantitative microfluidic bioassays are also provided using these sensors. In one aspect, a chip-scale complementary metal-oxide-semiconductor (CMOS) image sensor is utilized via contact imaging to quantify formed elements such as microbial and mammalian cells in sub-nanoliter reagent droplets.

In certain aspects a cytometer is provided through the use of contact imaging whereby the cell sample to be analyzed is contained in a disposable volume-calibrated reservoir that is placed in direct proximity to the digital imaging array. The cell sample reservoir can be fabricated as part of a microfluidic sample preparation cartridge that will facilitate fluid handling and minimize the volumes of sample and reagent needed for each assay, but will offer much of the simplicity and economy of a traditional hemocytometer, enabling a relatively unskilled worker to quickly perform biomarker labeling on cell samples.

In certain embodiments, excitation of fluorochrome assay markers is provided by planar LED light sources that generate little heat and draw sufficiently low power that the entire analysis system can be powered by a USB connection or battery technology.

In one aspect, this document features an optical detection platform for quantitative assays that includes a solid state light source disposed in a fixed array with a solid state light sensor mounted on a circuit board; and a microfluidic test sample chamber (e.g., a multichambered test sample chamber), wherein the test sample chamber is adapted to contain a test sample and is positioned to receive input light from the solid state light source and permit output light from an excited marker in the test chamber to be conveyed to the solid state light sensor that collects the light and generates signals that are conveyed to a data analysis module. The solid state light source can include at least one LED (e.g., a planar LED such as a semi-transparent LED or an organic LED). The planar semi-transparent LED can be positioned between the microfluidic test sample chamber and the sold state light sensor. The solid state light sensor can be a CMOS image sensor. The optical detection platform further can include at least one filter (e.g., an emission filter). In one embodiment, the signals define a power spectrum and frequency or luminescence spectrum of the light collected on the light sensor that together provide quantitation of assays conducted in the microfluidic test sample chamber. The platform can be lenseless. In some embodiments, the platform further includes at least one planar microlens array. The microfluidic test sample chamber can be disposable.

The solid state light source and the solid state light sensor of any of the optical detection platforms described herein can be powered and controlled by a combined power and data control cable. In some embodiments, an optical detection platform further can include a computer connected via the combined power and data control cable, wherein the computer is programmed to collect, analyze and store results of assays conducted with the optical detection platform.

Any of the optical detection platforms described herein can be a portable hand-held platform.

This document also features a method of performing a quantitative assay in an optical analyzer that includes a microfluidic test sample chamber in operable communication with a solid state light source and a solid state light sensor. The method includes loading a test sample into the microfluidic test sample chamber; illuminating the test sample with an input light from the solid state light source; collecting an output light originating from the test sample with the solid state light sensor; and analyzing one or more parameters of the output light to quantitate characteristics of the test sample. The solid state light source can be a planar LED and the solid state light sensor can be a CMOS image sensor. The test sample can include eukaryotic or prokaryotic cells and one or more of the cells can be labeled with quantum dots or other optical reporter (e.g., a fluorescent molecule or organic dye such as fluoroscein, Phycoerythrin or one of the Alexa Fluor compounds). Such methods further can include determining a minimum quantity of collected output light and continuing to collect output light until the minimum quantity is reached. The analyzing can be conducted by contact imaging and direct analysis of data collected from the eukaryotic or prokaryotic cells. The analyzing can be based on an indirect measurement of a power spectrum of light emitted by the quantum dots or other optical reporter upon excitation by the input light. The excitation wavelength of the input light can be lower than the output light.

In any of the methods described herein, the optical analyzer can be a hand-held analyzer and the solid state light sensor and the solid state light sensor can be powered and controlled by a combined power and data control cable.

This document also features a method of performing a quantitative assay in an optical analyzer (e.g., a hand held analyzer) that includes a microfluidic test sample chamber in operable communication with a planar LED and a CMOS image sensor. The method includes providing at least one quantum dot or other optical reporter conjugated antibody that is specific for a cell marker; loading a test sample into the microfluidic test sample chamber, wherein the test sample comprises a population of mammalian cells that has been reacted with the at least one quantum dot or other optical reporter conjugated antibody; illuminating the test sample with an input light from the planar LED; collecting an output light originating from the test sample with the CMOS image sensor; and analyzing one or more parameters of the output light to quantitate the cell marker (e.g., tumor cell or stem cell marker) in the test sample. In some embodiments, the cell marker is a T cell marker and the method is performed to determine a CD4 count.

In another aspect, this document features a method of determining efficacy of a drug in an individual patient using an optical analyzer (e.g., a hand held analyzer) that includes a multichambered microfluidic test sample chamber in operable communication with an LED light source and a CMOS image sensor. The method includes collecting a pretreatment sample of cells from a patient; administering a drug to the patient; collecting a treatment sample of cells from the patient; testing the pretreatment and treatment cells from the patient in the multichambered microfluidic test sample chamber; illuminating the sample of pretreatment and treatment cells with an input light from the solid state LED; collecting an output light originating from the test sample with the CMOS image sensor; and analyzing one or more parameters of the output light to determine changes in the cells of the patient as a consequence of treatment. For example, the parameter can be light scattering. The cells can be blood cells enriched for platelets and the drug can be an anti-platelet drug. The pretreatment and treatment platelets can be tested for plasmatic coagulation or cellular coagulation.

This document also features a method of determining sensitivity of tumor cells for a potential chemotherapeutic drug using a hand-held optical analyzer that includes a microfluidic test sample chamber in operable communication with an LED light source and a CMOS image sensor. The method includes collecting a sample of tumor cells from a patient; treating the tumor cells with one or more potential chemotherapeutic agents; loading the treated tumor cells into the microfluidic test sample chamber wherein the tumor cells are tested for sensitivity to the potential chemotherapeutic agents by reacting the cells with one or more fluorescent markers of apoptosis; illuminating the tested tumor cells with an input light from the solid state LED; collecting an output light originating from the test sample with the CMOS image sensor; and analyzing one or more parameters of the output light to determine a level of apoptosis induced by the potential chemotherapeutic agent. The fluorescent marker of apoptosis can be a quantum dot or other optical reporter labeled antibody to Annexin V. The fluorescent marker of apoptosis can be a substrate for an enzyme that is associated with apoptosis.

In yet another aspect, this document features a method of obtaining a semi-quantitative point-of-care cell type distribution in a population of freshly isolated adipose derived stromal cells. The method includes loading a test sample of adipose derived stromal cells into a microfluidic test sample chamber; illuminating the test sample with an input light from a solid state light source; collecting an output light originating from the test sample with a solid state light sensor; and analyzing one or more parameters of the output light to quantitate characteristics of the test sample. The test sample can be labeled with marker antibodies in the test chamber. The test sample can be labeled with marker antibodies prior to loading into the test chamber. The solid state light source can include an LED. The solid state light sensor can be a CMOS sensor. The test sample can be labeled with quantum dot or other optical reporter derivatized maker antibodies. Analyzing one or more parameters of the output light can be performed by a computer in operable association with the light sensor and the computer provides a point-of-care read-out of a distribution of cell populations in the test sample. The microfluidic test sample chamber used in the methods described herein can be in fluid communication with a point-of care adipose derived stromal cell isolation unit.

This document also features a method of assessing a physiologic condition of a patient. The method includes loading a test sample of fluid or cells from the patient into a disposable microfluidic test sample chamber; illuminating the test sample with an input light from a planar LED that is disposed in a fixed stacked array with CMOS light sensor; collecting an output light originating from the test sample with CMOS sensor; and analyzing one or more parameters of the output light to quantitate characteristics of the test sample. The physiologic condition can be a coagulation state or a metabolic state. The disposable microfluidic test sample chamber can have a test sample volume of less than 100 microliters.

### BRIEF DESCRIPTION OF THE DRAWINGS

For a more complete understanding of the present invention, including features and advantages, reference is now made to the detailed description of the invention along with the accompanying figures:
Figure 1 depicts one embodiment of an integrated contact imaging cytometry.
Figure 2a is a top view and Figure 2d is a side view of a prototype integrated CMOS image sensor integrated with digital microfluidics. Figure 2b is a magnified view of the CMOS image sensor overlayed by a DEP fluid handling electrode array. Figure 2C is an actual contact image of the fluid handling electrode.
Figure 3a depicts the results of a colorimetric analysis using commercially available low-cost image sensor and shows contact images of eosin solutions in micromolded polydimethylsiloxane (PDMS) microchannels. Figure 3b depicts absorbance of eosin solutions measured with a CMOS sensor. Figure 3c shows the results of a colorimetric glucose concentration assay performed with integrated CMOS sensor.
Figure 4 shows a quantitative bioluminescent analysis via commercially available low-cost image sensor. Figure 4a is a contact image of a KinaseGloPlus assay reaction in an array of microwells. ATP concentration is noted. Figure 4b shows the results of the luminescence assay from the integrated CMOS sensor.
Figures 5a and b are contact images of microdroplets on a fluid handling electrode array.
Figures 6A and B depict exploded views of contact imaging cytometry platforms in alternative embodiments of the special relationship between light sources, filters, fluid handling and image sensors.
Figures 7A and B depict exploded views of further contact imaging cytometry platforms in alternative embodiments of the special relationship between light sources, filters, fluid handling and image sensors. In Figure 7A a semitransparent flat LED light source is employed. In Figure 7b, a light pipe embodiment is depicted.
Figure 8 depicts the published typical absorption and emission spectra of Qdot® conjugates.
Figure 9 depicts the published spectral internal transmittance curves of Schott^{®} KV filter types.
Figure 10 depicts an exploded view of one embodiment of an integrated contact imaging microfluidic apparatus and further depicts an assembled rotated view showing the location of a disposable test sample preparation cartridge.
Figures 11A and B show expected calibration curves and correlates between energy data obtained and quantitation of cell numbers.

### DETAILED DESCRIPTION OF THE INVENTION

While the making and using of various embodiments of the present invention are discussed in detail below, it should be appreciated that the present invention provides many applicable inventive concepts which can be employed in a wide variety of specific contexts. The specific embodiments discussed herein are merely illustrative of specific ways to make and use the invention and do not delimit the scope of the invention.

Contact imaging (also referred to as direct or shadow imaging) is achieved by coupling a photodetector array directly to the subject to be imaged without intervening optics. Contact imaging is thus particularly suitable for use in microdevices where the object(s) of interest and sensor are of a similar scale. *See e.g.* Ji HH, Sander D, Haas A, Abshire PA. Contact imaging: Simulation and experiment. IEEE Transactions on Circuits and Systems I-Regular Papers. 54 (2007) 1698-1710. Kovacs and colleagues have observed active cultures of C. *elegans* nematodes (typical length∼ 1 mm) using shadow images from a custom camera chip attached to the bottom of a microfluidic culture chamber. Lange D, Storment CW, Conley CA, Kovacs GTA. "A microfluidic shadow imaging system for the study of the nematode Caenorhabditis elegans in space" Sensors and Actuators B-Chemical 107 (2005) 904-914.

In one application of lenseless contact imaging, a custom-fabricated array of 1 µm diameter apertures was reported, in which objects under examination were required to be in translational motion in order to achieve, in effect, high-resolution raster scanning. Cui X, Lee LM, Heng X et al. "Lenseless high-resolution on-chip optofluidic microscopes for Caenorhabditis elegans and cell imaging" Proc Natl Acad Sci USA 105 (2008) 10670-10675. This optofluidic microscopy (OFM) method has been used to obtain transmitted light images of cells, spores, and nematodes with 0.8 µm resolution.

Ozcan has reported a lense free cell monitoring technique (LUCAS) that uses digital image processing of direct shadow images of the subject to recognize various diffraction patterns produced by illuminated particles such as polystyrene microbeads, yeast, *E. coli,* erythrocytes and hepatocytes. Seo S, Su TW, Tseng DK, Erlinger A, Ozcan A. "Lensfree holographic imaging for on-chip cytometry and diagnostics" Lab on A Chip 9 (2009) 777-787. It is not clear, however, that such an approach would be capable of distinguishing between morphologically similar cell types such as CD4⁺ and CD8⁺ T-lymphocytes.

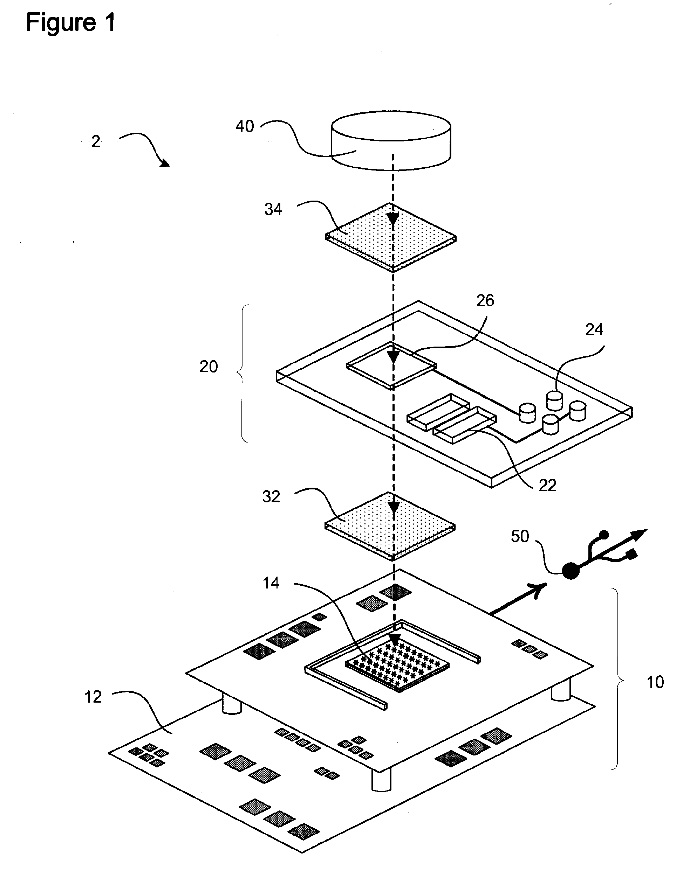

The present inventors have generated a novel micro imaging bioassay and cytometry platform that is adaptable for ultra-low-cost point-of-need assays. As depicted in **Figure 1**, in one embodiment excitation light from a solid state excitation source **40** passes through an excitation bandpass filter **34** that only permits light in the excitation wavelength range of a fluorophore assay label to pass. However, in certain embodiments the excitation light emits only in the desired wavelength and no excitation bandpass filter is required to provide selectivity to the excitation wavelength. In one particular embodiment the excitation source **40** includes one or more collimated light emitting diodes (LED) having emission wavelengths suitable for excitation of the fluorescent, luminescent or colorimetric assay marker used. Use of LEDs as the excitation source capitalize on the small size, energy efficiency, high luminosity, long service life, and range of emission spectra that such solid state illumination sources offer. In certain embodiments the LED is an Indium Gallium Nitride (InGaN) or PhlatLight LED chip, similar to those used for mobile phone backlighting or handheld digital projection, into the integrated cytometer platform design to provide a compact and reliable illumination source for the system. In other embodiments, the LED is an organic LED (OLED).

In one particular embodiment, the LED is a planar light source such as an organic LED (OLED) affixed together with the contact imaging module, together with any excitation or emission filters that may be required. In some aspects the LED is electrically connected to the contact imaging module via a flat flex cable so that it can be positioned above the sample cartridge, in line with the optical path of the cytometer.

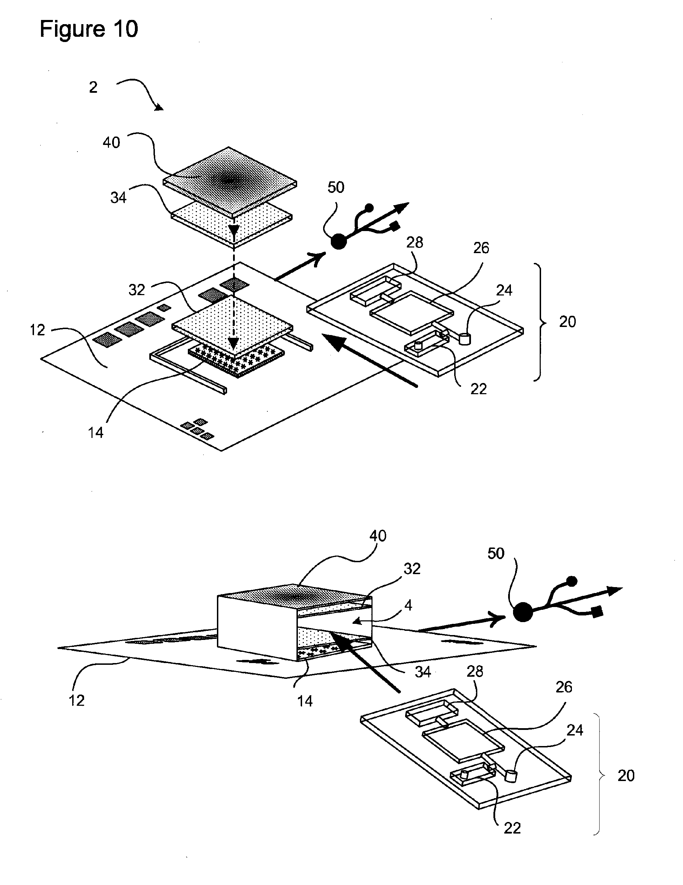

Depending on the LED and the fluorochrome, excitation filters may be dispensed with, thus providing simplicity and cost savings to the device. In certain embodiments the test sample preparation cartridge is affixed with the light source together with any required excitation or emission filters. In other embodiments the test sample preparation cartridge is a disposable element that slides into a slot over the contact imaging module. In the embodiment figuratively depicted and not shown to scale in **Figure 10****,** the light source **40** and any required excitation filters **34** or emission filters **32** are fixed together in a reusable unit that includes a slot **4** for entry of a disposable test sample cartridge **20**.

Typically an emission bandpass filter **32** that is selective for the emission wavelength range is placed between the sample reservoir **26** and the image sensor **14**. The emission bandpass filter **32** may not be required depending on the spectral properties of the light detector but typically an emission filter is utilized to block the excitation wavelengths for the light source thus allowing only the light from the excited fluorochrome to pass on to the detector. In the depicted embodiment the image sensor **14** is a CMOS sensor. In other embodiments the image sensor is a charge coupled device (CCD). The contact imaging module **10** includes an embedded microprocessor **12** for control and I/O. In the depicted embodiment, the image sensing module is connected for data transmission and power via an electrical conduit such as USB connection **50**. Other power and data transmission cables may be employed such as, by way of non-limiting example, a FireWire cable. The USB or FireWire cable can be connected to a lap top or other computer for data analysis and readout of the assay in filed settings. In the depicted embodiment the sample reservoir is disposed in a disposable test sample preparation cartridge **20** that may include one or more reagent reservoirs **22** and sample inlets **24** molded together as an integral unit. In certain embodiments, such as depicted in **Figure 10****,** the test sample preparation cartridge includes a waste disposal reservoir **28** that is integral to the cartridge thus providing for containment of biohazardous fluids.

In certain embodiments, the entire contact image cytometer platform **2** is fixed together as a single disposable unit. In other embodiments, the only test sample preparation cartridge **20** is disposable and is adapted to slide into the remainder of the elements which are fixed together for multiple uses.

In order to provide the resolution needed for the cytometry based diagnostic applications indications presented herein, a five or eight megapixel sensor is sufficient. The use of a mass-produced CMOS sensor provides several advantages. Because development and production costs are distributed over many millions of unit sales, it is possible to realize an advanced and fully featured component at a reasonable cost per unit. CMOS fabrication methods enable integration of the photon sensing array, analog to digital signal conversion, image processing, and system control into a single device that outputs quantitative, digital data and requires a minimum of support components. Additionally, CMOS fabrication takes advantage of established techniques that are widely used in the volume manufacture of microprocessor and memory devices. The specifications of the image sensor used in these experiments make it suitable for integration with a variety of microfluidic devices in addition to those described here.

The active sensing area of the CMOS imager used in the proof-of-principle studies described herein was 5.70 mm x 4.28 mm and included an array of roughly five million 2.2 µm square pixels, supporting both quantitative photodetection and high resolution contact imaging of typical microfluidic features. The responsivity and low dark current provide low light level performance that is acceptable for most applications. Values from neighboring pixels can also be summed to further increase sensitivity or averaged to decrease signal noise as needed. While such spatial pixel binning results in a concomitant decrease in signal resolution, the use of a high density array of millions of small light-sensing elements mitigates this effect.

A typical 10 µm diameter mammalian cell can be imaged with a 5 x 5 array of twenty-five 2.2 µm pixels that would cover an 11 µm x 11 µm square area. In one example for imaging of individual cells, the above described CMOS sensor would have 2.5 x 10⁶ pixels available for imaging and, using 25 pixels to image each cell, approximately 100,000 cells could be contact imaged at a cell loading density on the substrate to be imaged of approximately 50-percent coverage. This is at least a factor of ten higher than the number of cells that can be assayed in a standard flow cytometry run where fewer than 10,000 cells are typically analyzed.

In order to develop a cytometer platform design that is compact and as simple as possible, a lenseless approach is applied in certain embodiments. For example, in one embodiment, a lenseless approach can use thin optical elements. Such thin optical elements can be stacked onto sensor array diodes in lieu of thin-film filters. Should a lensing element be desired, compact lensing options such as for example stock planar microlens arrays are available from sources including Nippon Sheet Glass (NSG, Japan), MEMS Optical Inc. (Huntsville, Alabama), and Thorlabs (Newton, New Jersey). Custom polymer lens arrays could also be integrated into the sample preparation cartridge design. Additionally, inexpensive macro lenses and microscope objectives are available that provide acceptable solutions to the imaging requirements for an imaging cytometer.

Detection and discrimination of cells labeled with fluorescent probes has been heretofore generally achieved using an arc-lamp or laser illumination source and epi-fluorescence filter configuration that comprises a dichroic mirror (or beamsplitter, which reflects certain wavelengths of light while transmitting others) and a pair of optical bandpass filters that transmit light only in the respective excitation and emission wavelength range of the probe fluorophore reporter. For typical fluorophores that exhibit a Stokes shift, this configuration provides a means to direct illumination wavelengths that excite probe fluorophores to the labeled sample, while directing only the red-shifted fluorophore emission wavelengths to a photodetector. This configuration is used in epi-fluorescent and confocal laser scanning microscopes, as well as conventional flow-cytometers.

In one embodiment of the present invention, relatively low-cost and volume-manufactured solid state illumination sources, photodetectors, and thin-film and polymer optical elements are utilized. Depending on the configuration of the light source and the fluorochrome, it may be necessary to filter out interfering signals that may result from scattering of short wavelength excitation light. Dichroic and narrow bandpass filters such as those from Schott AG may be employed and may be removable or incorporated into the integrated cytometer platform. In one embodiment, thin light filtering elements are used that direct the excitation wavelength to the labeled sample while excluding them from the detector. In such an embodiment, the sample is placed as close as possible to the detector (e.g., within a few hundred microns) to capture minimally diffracted light from labeled target cells.

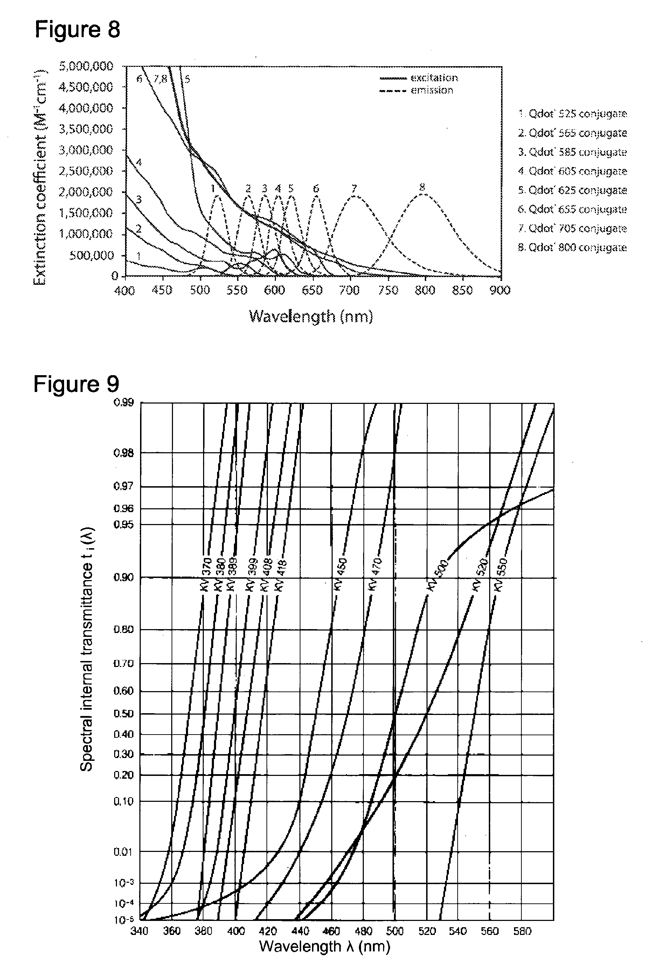

**Figure 9** depicts the published spectral internal transmittance curves of various Schott KV filter types having steep internal transmittance curves and very low inherent fluorescence. The Schott KV filters are glass-plastic laminated filters in which the spectral properties are provides by a special plastic layer that is sandwiched between two polished glass plates to protect the plastic filter sheet. Although filters such as the Schott KV filters may be directly applicable to forming into a sandwiched fluid handling optical imaging design as disclosed, in other embodiments, thin filters such as the thin plastic optical elements of the KV filters are directly formed onto surfaces of the sandwiched fluid handling optical imaging design. For example, in one embodiment thin filter elements are applied directly to the upper and/or lower surface of the fluid handling element.

In one aspect, solid state illumination sources are used together with fluorescent compounds that are broadly excited but emit brilliantly in very narrow emission peaks. In particular aspects, the unique spectral properties of nanocrystal reporters (so called quantum dots) are used. The term "quantum dots" refers to nanocrystals of semiconductor materials (typically cadmium mixed with selenium or tellurium) that have the property of absorbing photons at one wavelength and re-emitting at a different wavelength. The energy and thus the wavelength of the emitted light are dependent on the physical size of the quantum dot. Thus, the same excitation wavelength can induce different sized quantum dots to emit in different emission colors (wavelengths) thus permitting multicolor assays. **Figure 8** depicts the excitation (extinction coefficient on the Y axis) and emission wavelengths (X axis) of a number of different Qdot® quantum dots available from Invitrogen.

The Invitrogen Qdots® feature a semiconductor core encased in a further semiconductor shell of zinc sulfide which is in turn encased in an amphiphilic polymer coating to provide for water solubility and is covalently modified with a functionalized polyethylene glycol (PEG) coating that reduces non-specific binding and permits conjugation via sulfhydryl/maleimide chemistry. Different sized quantum dots can be derivatized by, or conjugated to, different markers such as, for example, antibodies to cell surface molecules, ligands for cell surface molecules, etc. In one embodiment, derivatized quantum dots are incubated with cells to be tested and the unbound derivatized quantum dots are washed away prior to visualization in the imaging test chamber. The incubation and washing away of unbound quantum dots is conducted in the microfluidic test sample chamber in one aspect of the invention. In other embodiments, the labeled and washed cells are prepared prior to loading in the chamber.

Particular advantages of quantum dots include that a plurality of different wavelength emitters can be excited with a single light source, they are orders of magnitude brighter than conventional fluorophores, and they are resistant to photobleaching thus permitting long term and or repeated imaging of multiplexed assays.

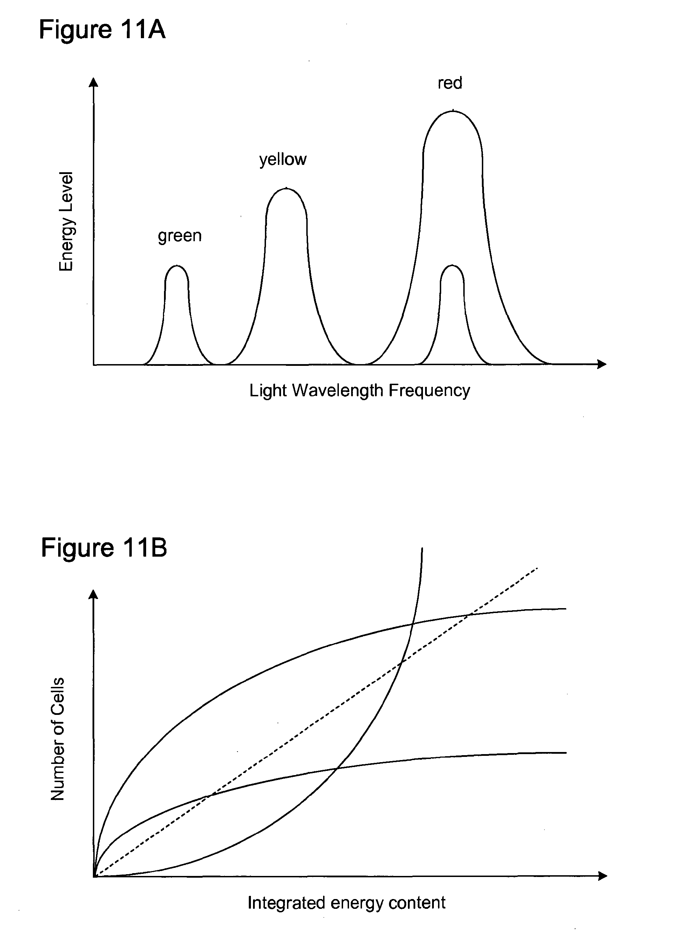

In one embodiment of the invention, the power spectrum and frequency or integral luminescence spectrum of the light received on the photodetector is analyzed in lieu of individual cell imaging. A population of cells is labeled and a calibration curve between numbers of cells and integrated energy content for the emission frequency for the respective quantum dot marker is determined such as is depicted in **Figure 11B**. The calibration curve takes into account the affinity and avidity of the respective antibody bound to the quantum dot as well as the character of the cell surface marker being detected. Where populations of cells are reacted with several different markers having non overlapping frequency spectra as depicted in **Figure 11A**, the emission data is correlated with the calibration curve and respective numbers of cells bearing different cell surface markers are thereby quantitated. The relative energy content in the different spectra can be calculated by integrating the area under the curves obtained. In this way a semi-quantitative determination of the numbers of cells can be obtained without direct counting of the number of events. This is of special importance when it low numbers of events are obtained such as for example with rare circulating cancer cells. In particular, through the use of quantum dots, which are resistant to photobleaching, exposure time can be prolonged until the controlling program collects sufficient information for integration and analysis from the calibration curve. In comparison to cell counting where a stable environment is required to avoid counting the same cell twice, when data of the overall power spectrum is collected it does not matter where the signal originates and need for stability is avoided thus making the device suitable for field or bedside use.

In one aspect of the invention, a portable assay device is provided that is connected via a single data and power cable to a portable computer. In some embodiments, the portable assay device can be connected to the computer wirelessly or via infrared technology. In some embodiments, the portable assay device is powered by a battery. In certain aspects, the patient's data is pre- loaded into the computer prior to running the assay. The computer receives test data from the assay, analyzes the results and is programmed to associate the data directly with the patient's file. The data can be sent from the bedside to the patient's electronic medical record.

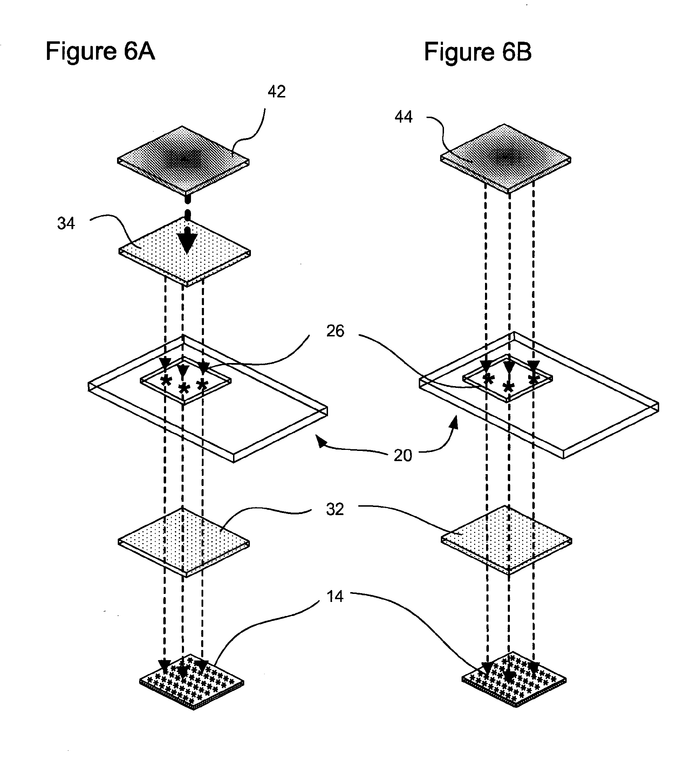

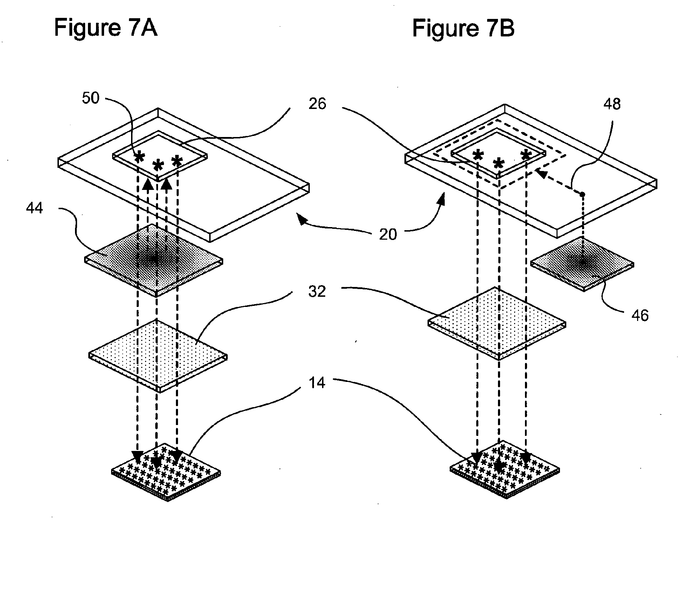

Example optical designs for integrated image cytometer platforms are illustrated in **Figures 6** and **7**. Such alternative designs provide scalable, low-cost options for fabricating the necessary light filtering elements as part of the contact image cytometer module, the sample preparation cartridge, or both. In **Figure 6A**, excitation light from a multi-wavelength excitation source **42** passes through excitation bandpass filter **34** that only permits light in the excitation wavelength range of the fluorophore to pass. An emission bandpass filter **32** that is selective for the emission wavelength range is placed between the sample reservoir **26** and the image sensor **14**. The emission bandpass filter **32** may not be required depending on the spectral properties of the illumination source. **Figure 6B** is a similar configuration to **Figure 6A**, however the excitation source **44** produces light in a sufficiently narrow wavelength range to obviate a need for an excitation bandpass filter.

**Figure 7A** illustrates a configuration that exploits the partial transparency of some solid state excitation sources. In certain embodiments the partially transparent light source is a planar LED light source. Osram Opto Semiconductors has developed organic LEDs (OLEDs) having a transparency of 55% with expectations that at least 75% transparency can be achieved. Using such technology, the excitation source **44** can be placed under the sample reservoir, illuminating from the bottom up. Light emitted (or scattered, depending on the reporter element) from the fluorochrome bound probe **50** passes downward through the excitation source **44** and to the image sensor **14** without the excitation light hitting the sensor. The figure illustrates an emission bandpass filter **32** for the emission wavelength although this may not be required depending on the bandpass characteristics of the partially transparent excitation source. Indeed, depending on the characteristics of the transparent light source and the controlled directionality of emission, both excitation and emission filters may be avoided with resulting improvements to simplicity and cost of the device.

**Figure 7B** illustrates the use of a light pipe **48**, fiber optic element, or other light directing means integral to the sample preparation cartridge **20** to direct excitation light to the sample reservoir **26**. By moving the excitation source out of the direct optical path of the sample to be assayed and the image sensor, possible interference from the excitation illumination source is reduced. In addition to optical filtering approaches, alternative use of a time-resolved approach is feasible. This approach exploits the property of certain probes whereby an excited reporter element continues to emit light for a short time after excitation ceases. Such configurations are essentially background free as light from the reporter element is only detected and measured when the illumination source is off.

### Example 1: Initial Proof of Principal Studies

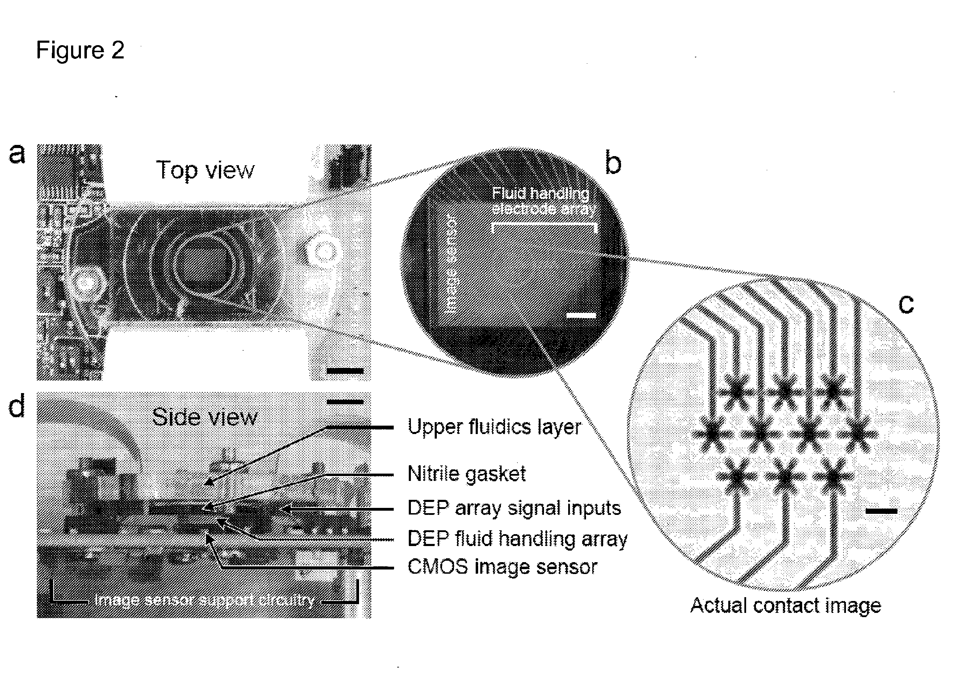

Reagents were imaged in the digital microfluidic device depicted in **Figures 2a** **- d** including a CMOS image sensor integrated with digital microfluidics. **Figure 2a** is a top view, while **Figure 2d** is a side view. Scale bars of 5 mm are shown on **Figures 2a** and **d**. **Figure 2b** provides a magnified view of the CMOS image sensor overlayed by a dielectrophoresis (DEP) fluid handling electrode array. The scale bar is 1mm. The DEP microfluidic device utilizes electrically generated forces to manipulate discrete reagent droplets. The reagents are not confined to channels but are instead manipulated using an addressable electrode array.

The fluid handling microelectrode array was fabricated using standard microlithographic wet etch processing from thin film Au/Ti (2500 Å/500 Å) on 1 mm-thick Pyrex substrates. The upper fluidics layer was laser-machined in-house (VersaLASER, Universal Laser Systems, Inc., Scottsdale, AZ) from a cast acrylic sheet (Acrylite GP, Evonik Cyro, Parsippany, NJ). The device layers were bonded using acrylic pressure sensitive adhesive transfer tape (467MP, 3M, St. Paul, MN). Electrical interconnects were constructed using standard 1 mm-pitch surface mount board connectors (SEI series, Samtec, Inc., New Albany, IN) and stock flat flex cables (Parlex USA, Methuen, MA). Array energization and droplet manipulation were achieved using custom hardware and a LabVIEW Software interface (National Instruments, Austin, TX). Construction of similar devices and droplet manipulation by dielectrophoresis is described in detail elsewhere. See JA Schwartz, JV Vykoukal, PR Gascoyne, Lab Chip 4 (2004) 11-17; PR Gascoyne, JV Vykoukal, JA Schwartz, TJ Anderson, DM Vykoukal, KW Current, C McConaghy, FF Becker, C Andrews, Lab Chip 4 (2004) 299-309.

An actual contact image of the fluid handling electrodes is shown in **Figure 2c** where the scale bar is 125µm. The CMOS image sensor that took the picture of **Figure 2c** was a commercially available 5 MP (5x10⁶ pixel) CMOS camera sensor having 2.2 micron pixels (Aptina MT9P031). The image sensor is essentially a massive (2592H x 1944V) array of photodetectors. Each photodetector outputs an analog signal that is proportional to the number of photons that strike it. This is converted by an A/D to a 12-bit (4096 grey level) value for each pixel. These 5 million 12-bit values stream out of the image sensor constantly according to the clock cycle. Increased exposure is achieved by reading out the data slower (longer reset-read cycle) so more photons strike the photodetectors before the value is read, or by summing the values for neighboring pixels (binning), or by accumulating data for each pixel from several exposures.

Contact imaging of various microfluidic devices was performed using an Aptina CMOS imaging hardware kit MT9P031112STCD (Aptina Imaging Corporation, San Jose, CA). As described by Micron, the manufacturer, the MT9P031 sensor can be operated in its default mode or programmed for frame size, exposure, gain setting, and other parameters. The default mode outputs a full-resolution image at 14 frames per second (fps). An on-chip analog-to-digital converter (ADC) provides 12 bits per pixel. FRAME_VALID and LINE_VALID signals are output on dedicated pins, as is a pixel clock that is synchronous with valid data. The MT9P031 sensor used is a progressive-scan sensor that generates a stream of pixel data at a constant frame rate. It uses an on-chip, phase-locked loop (PLL) to generate all internal clocks from a single master input clock running between 6MHz and 27MHz. The maximum pixel rate is 96 megapixels per second, corresponding to a clock rate of 96 MHz. The sensor is programmed via the two-wire serial bus, which communicates with the array control, analog signal chain, and digital signal chain. The core of the sensor is a 5-megapixel active-pixel array. The timing and control circuitry sequences through the rows of the array, resetting and then reading each row in turn. In the time interval between resetting a row and reading that row, the pixels in the row integrate incident light. The exposure is controlled by varying the time interval between reset and readout. Once a row has been read, the data from the columns are sequenced through an analog signal chain (providing offset correction and gain) and then through an ADC. The output from the ADC is a 12-bit value for each pixel in the array. The ADC output passes through a digital processing signal chain (which provides further data path corrections and applies digital gain). The pixel data are output at a rate of up to 96Mp/s, in addition to frame and line synchronization signals.

The sensor was controlled using Aptina DevSuite characterization software. Collimated light was obtained by coupling an Edmund Industrial Optics 5X Beam Expander (Barrington, NJ) to a Fiber-Lite Series 180 High Intensity Illuminator (Dolan-Jenner Industries, Inc., Boxborough, MA). The image sensor used in the proof of principal studies is produced with integrated RGB Bayer filters that provide a ready capability for multiple wavelength (600, 530, and 450 nm) absorbance measurements, obviating the need for additional optical elements. Also, since the images obtained from the sensor include wavelength data, they are useful for both single and multicolor colorimetric assays. An available monochrome version of the sensor offers better quantum efficiency and would be appropriate for circumstances where enhanced low light sensitivity is needed.

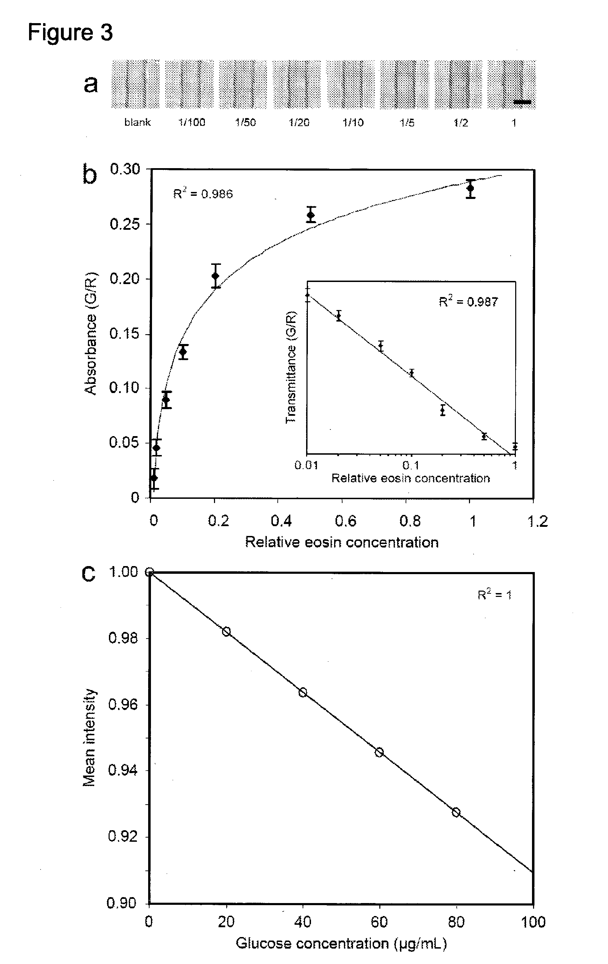

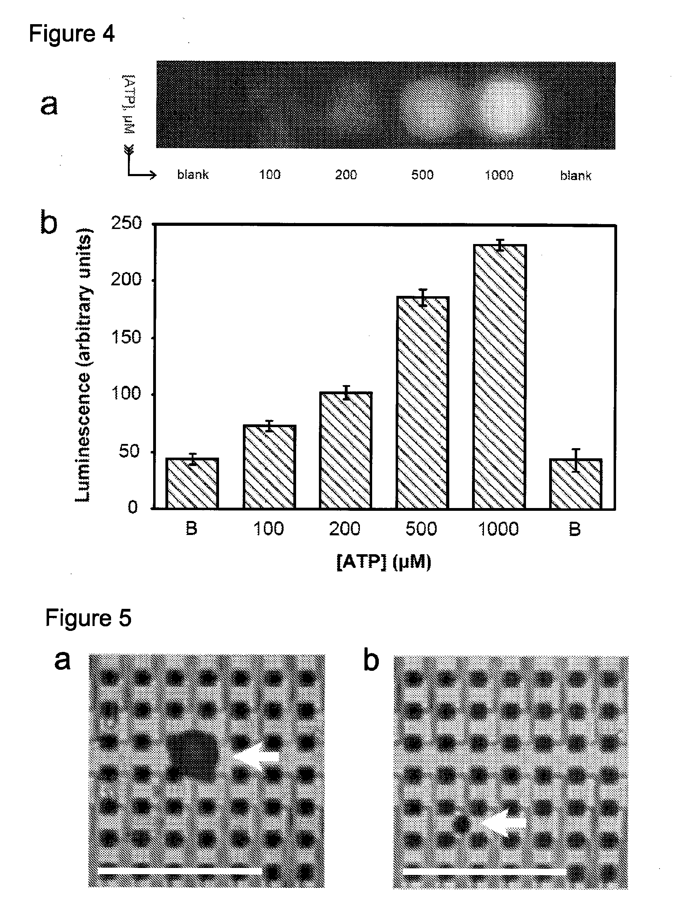

The stacked design enables simple integration of microfluidic and imaging components is applicable to other architectures, including microchannels (contact image shown in **Figure 3a**) or arrays of microwells (contact image shown in **Figure 4a**). The design allows the fluid handling system and reagents wells to be fabricated as a replaceable cartridge. This design minimizes the overall system size and is applicable to other microfluidic device architectures, including those that employ glass or polymer microchannels (**Figure 3a**) or arrays of microfluidic wells or spots (**Figure 4a**). The design also allows the assay reagents and fluid handling system to be fabricated in the form of a replaceable cartridge, as opposed to single use designs where assays are performed directly on the sensor itself. For our contact imaging experiments, we utilized a collimated light source (tungsten lamp and modular beam collimator) to minimize diffraction artifacts and image blurring. Use of a point source light emitting diode has also been demonstrated for this purpose. *See* D. Lange, C. W. et al. Sensors and Actuators B-Chemical 107 (2005) 904-914.

The CMOS array of pixels allows visualization and position tracking of sub-microliter (µL) and sub-nanoliter (nL) volume droplets making it practical for general use in digital microfluidic devices. **Figure 5** shows the relative sizes of reagent droplets (arrows) 13.0 nL (**Figure 5a**) and 0.33 nL (**Figure 5b**) directly imaged by a CMOS image sensor. The droplets are seen against the backdrop of a DEP fluid handling electrode array of a different design than that of **Figure 2c**. Scale bars on **Figures 5a** and **b** are 1 mm.

In addition to droplet based schemes, the utility of the CMOS image sensor was tested as a quantitative absorbance detector for other microfluidic applications. In one test, a microchannel architecture was fabricated using cast polydimethylsiloxane (PDMS) bonded to a glass coverslip. As in the contact imaging experiments with droplets, the microfluidic assembly was placed directly on the imaging surface of the sensor and transilluminated with collimated light. The lack of intervening optics and large area (24 mm²) sensor array facilitates simple and misalignment-tolerant integration of the microfluidic and detector components. It also enables measurements to be performed on multiple samples in parallel using a single sensor device.

The depicted CMOS image sensor was tested for quantitative absorbance measurements using a colorimetric assay. Fluidic microchannels were cast (Dow Coming Sylgard 184 Silicone Elastomer) using a SU-8 on silicon wafer negative mold (200 µm x 20 µm). Each demolded channel was sealed against a round glass coverslip (Product 26022, 18 mm round glass #1 coverslip, approximately 130-170 µm thick, Ted Pella, Inc., Redding, CA). Eosin Y solution (M 10660, Chroma-Gesellschaft, Schmid & Co., Stuttgart, Germany) was serially diluted in deionized water. Solutions of the eosin Y, a red dye with maximum absorption in aqueous solution between 515 and 518 nm, were made. Serial dilutions were prepared from stock to span a range of concentrations across two orders of magnitude. Before analysis of the test solutions, the microchannel was filled with water and the red, green and blue digital gains were independently adjusted to give matched average intensity values for each color component for a multipixel region of interest in the center of the microchannel. Such "white balancing" of the image is akin to zeroing a conventional spectrophotometer, and is easily automated. Basic image processing was used to find the edges of the channel (they are apparent in the contact image, and are distinguished graphically in a plot of the intensity data as regions of low transmittance). The intensity data from the resulting color contact images was analyzed to obtain an absorbance for each sample by comparing ratio of the pixel intensity of the green (530 nm) and red (600 nm) channels. The mean intensity ratios obtained from a minimum 1 x 50 pixel region of interest in the central area of the channel provided quantitative absorbance data that correlated well with eosin Y concentration (**Figure 3**). By averaging data from several neighboring photodetectors, the signal to noise ratio of the absorbance measurements is increased as evidenced by the small relative error and good fit of the trendlines. The solutions of eosin Y were evaluated across a 100-fold concentration range in the PDMS microchannel depicted in **Figure 3a**. The scale bar is 200 µm. Mean intensity data from the center of the channel yielded quantitative absorbance measurements that correlated with eosin Y concentration (**Figure 3b**).

To demonstrate that the sensor is practical for biochemical analyses, a quantitative glucose assay was performed. Specifically, a standard coupled enzyme assay was chosen in which the conversion of glucose to gluconic acid is proportionally linked to the oxidation of o-Dianisidine to form a colored product whose absorbance is measured at 540 nm. Specifically a Glucose (GO) Assay Kit GAGO-20 (Sigma-Aldrich, St. Louis, MO) was used according to the manufacturer's suggested protocol. The glucose standard reactions were loaded into 1.3 mm depth hybriwells (S-24733, Invitrogen Molecular Probes, San Diego, CA) affixed to round glass coverslips and contact imaged on the sensor. The resulting pixel intensity values were measured to determine absorbance of the colorimetric product (oxidized o-Dianisidine) as a function of glucose concentration. Data for each point is the mean intensity value obtained from a 2025 pixel (approximately 100 µm x 100 µm) region of interest. Intensity values were normalized to the highest value. Glucose solution concentrations were quantitatively imaged across the recommended working range of the assay. A plot of the relative averaged green pixel intensity versus glucose concentration generated a linear standard curve with excellent trendline fit statistics (**Figure 3c**), similar to results that would be expected from a conventional spectrophotometer.

In another test, the CMOS image sensor was applied as a microscale quantitative luminometer using a standard bioluminescent reagent intended for high-throughput screening of kinase activity (commercially available Kinase Glo Plus Luminescent Kinase Assay, V3771, Promega Corporation, Madison, WI). Reactions were contained in an array of 1 mm diameter microwells fabricated on a glass coverslip and imaged directly with the sensor. Specifically, a microwell imaging cartridge for luminescence measurements was constructed by laser-cutting 1 mm diameter wells into black polyester sheet material. The sheet was then mounted to a coverslip using 3M pressure sensitive acrylic adhesive transfer tape 467MP. The Kinase-Glo Assay was used according to the manufacturer's protocol. ATP (A2383, Sigma-Aldrich) was serially diluted into kinase buffer (40 mM Tris-HCl pH 7.5, 20 mM MgCl₂, 0.1 mg/mL BSA). Kinase-Glo assay reactions were loaded into the array of microwells and the array was placed directly on top of the sensor chip for contact imaging. A simple opaque cover was used to protect the sensor from stray light. The relative luminescence (in arbitrary units) of each reaction was then determined from analysis of the blue (450 nm) pixel intensity values as quantified with the image sensor during exposure (200 milliseconds) of the contact image. Data shown for each point is the average ± s.d. from a 100 pixel region in the center of each well. The resulting contact image of the array (**Figure 4a**) reveals different ATP concentrations in each well across a 10-fold range. The relative luminescence of each sample was quantified (**Figure 4b**) by averaging the intensity data from a 1 x 100 pixel region of interest in the center of each microwell. As in the absorbance studies, averaging data from multiple pixels increased the signal to noise ratio and a good correlation between the measured intensity and reagent concentration was obtained.

These investigations demonstrate that a small, low cost and readily available CMOS sensor is suitable as a microscale contact imager, spectrophotometer, and luminometer for microfluidic implementations of typical absorbance and luminescence assays. The use of contact imaging for lab-on-a-chip detection simplifies system integration, eliminates the need for precision alignment of multiple optical components, and is applicable to the most common microfluidic architectures including those based on channels, reservoirs or droplets.

### Example 2: Cell Quantitation

In one embodiment of the invention, apparatus and methods are provided for quantitation of relative cell populations in a mixed cell population. In ordinary manual cell counting assays using Neubauer haemocytometers, cells are loaded into a fixed volume 3 mm x 3 mm x 0.1 mm chamber that contains 900 nL of cell suspension. Contact imaging such reservoirs is feasible as these dimensions are within the active area of typical digital image sensor formats, including a 1/3.6" format which comprises a 4.00 mm x 3.00 mm imaging area and is the smallest of the standard image sensor formats. In one embodiment, the sample preparation cartridge for the point-of-need image cytometer will include an integrated volume-calibrated reservoir similar to that found in a haemocytometer, enabling cell counts to be expressed in terms of concentration, an important consideration for diagnostic assays. In particular embodiments, all fluid handling is integral to the sample preparation cartridge, thereby minimizing waste and providing quality control. Using such chambers which feature a low volume (> 1µL) counting chamber, assays would require far less of a specimen volume than is currently collected for typical lab-based bioassays.

In one embodiment of a blood assays, a 10 µL volume of blood obtained from a fingerstick, earlobe prick, or other minimally invasive technique is loaded directly into the sample preparation cartridge using capillary filling. Alternatively, the cartridge may be loaded with a sample from a collection capillary such as a Micro-Hematocrit Tube (BD Diagnostics) or other standard sample collection container. Cell numbers in whole blood are such that accurate counting assays can be performed on 1 µL (or less) of blood sample. In undiluted whole blood, erythrocytes number 4-6 x 10⁶ per µL and total leukocytes number 4-11 x 10³ per µL. Normal counts for CD4+ leukocytes are in the range of 400 to 1200 cells per µL for men and 500 to 1600 cells per µL for women. In patients with HIV infection, antiretroviral therapy is usually initiated when CD4+ counts fall below 200 cells per µL.

Due to the sheer number of erythrocytes present in whole blood and their relative concentration (∼ 1000:1) compared to the leukocytes, analysis of leukocytes in undiluted whole blood can be challenging. In some embodiments, the intact erythrocyte content of whole blood samples is reduced as part of the sample reparation for analysis. For example, the ubiquitous ammonium chloride cell lysis technique, which exploits differences in the osmoregulative capacities of erythrocytes and other blood cell types, can be used to enable selective lysis of erythrocytes. The technique is known to be compatible with many biomarker labelling approaches and can readily be adapted for use with the sample preparation cartridge. In one such embodiment, lysis buffer is stored in a reservoir within the sample preparation cartridge and mixed with a blood sample using a channel or other fluid handling means. The buffer can also be stored in the form of a powder and reconstituted in the cartridge *pro re nata* using plasma or whole blood. Other methods for red cell separation or depletion are also useful. These include, for example using semi-permeable filters or other apparatus with appropriate pores or microfeatures to mechanically separate leukocytes from smaller diameter erythrocytes or debris based on size, using sedimentation or other means to exploit density differences between erythrocytes and other blood cell types, or using high-gradient magnetic fields to trap or manipulate erythrocytes based on the magnetic properties of hemoglobin. It is also possible to trap, separate, deplete or otherwise manipulate red blood cells by targeting erythrocyte-associated surface biomarkers such as glycophorins. Magnetic or non-magnetic microbeads, rosetting, or other means can be used in conjunction with biomarker recognition elements such as antibodies or aptamers to prepare samples for analyses. Such biomarker-based cell manipulation approaches could also ideally be integrated into the sample preparation cartridge.

Specific, microfluidic approaches for separating leukocytes from erythrocytes through lysis or sorting procedures have been described and these or related methods can alternatively be implemented in the sample preparation cartridge to reduce or eliminate erythrocytes from whole blood samples. *See e.g.* Sethu P, et al. "Continuous flow microfluidic device for rapid erythrocyte lysis" Anal Chem 76 (2004) 6247-6253; Sethu P, et al. "Microfluidic isolation of leukocytes from whole blood for phenotype and gene expression analysis" Anal Chem 78 (2006) 5453-5461; Han KH, Frazier AB. "Lateral-driven continuous dielectrophoretic microseparators for blood cells suspended in a highly conductive medium" Lab Chip 8 (2008) 1079-1086; Han KH, Frazier AB. "Paramagnetic capture mode magnetophoretic microseparator for high efficiency blood cell separations" Lab Chip 6 (2006) 265-273; Choi S, et al. "Continuous blood cell separation by hydrophoretic filtration" Lab Chip 7 (2007) 1532-1538; Yamada M, et al. "Microfluidic Device for Continuous and Hydrodynamic Separation of Blood Cells" In: Kitamori T, Fujita H, Hasebe S, eds. Micro Total Analysis Systems 2006: Proceedings of the µTAS 2006 Conference. Tokyo: Society for Chemistry and Micro-Nano Systems 2006:1052-4; Davis JA, et al. "Deterministic hydrodynamics: taking blood apart" Proc Natl Acad Sci USA 103 (2006) 14779-14784; VanDelinder V, Groisman A. "Perfusion in microfluidic cross-flow: separation of white blood cells from whole blood and exchange of medium in a continuous flow" Anal Chem 79 (2007) 2023-2030.

Robust discrimination of different cell types by means of the low-cost image cytometer is facilitated by labeling different cells of interest based on established biomarker profiles using fluorescent or light scattering probes, for example. Fluorescent quantum dot nanocrystal probes such as Qdots® (Invitrogen/Molecular Probes) are up to 20x brighter than conventional organic fluorophores, offer increased signal to noise, and exhibit much better photostability. *See* Michalet X, et al. "Quantum dots for live cells, in vivo imaging, and diagnostics" Science 307 (2005) 538-544. Such nanocrystal reporters also possess broad absorbance spectra with narrow and symmetrical emission peaks (**Figure 8**), allowing the performance of assays for two or more cell types simultaneously by exciting quantum dots of different emission wavelengths with a single excitation source. In certain embodiments, due to the high sensitivity of the assay, quantum dot labeling is used in conjunction with the disclosed microfluidic imaging device for detection of rare circulating cells such as tumor cells in blood.

The spectral properties of nanocrystal probes impact the optical design of the cytometer by driving the choice of excitation source and use and configuration of wavelength blocking barrier filters. Bioconjugated quantum dot probes are available from several sources and they can also be custom manufactured. Alternatively, noble metal nanoparticles may be employed that alter the light scattering (including Mie, Rayleigh, and Raman scattering) properties of labelled cells. *See* Aslan K, et al. "Plasmon light scattering in biology and medicine: new sensing approaches, visions and perspectives" Curr Opin Chem Biol 9 (2005) 538-544; Cao C, et al. "Resonant Rayleigh light scattering response of individual Au nanoparticles to antigen-antibody interaction" Lab on a Chip 9 (2009) 1836-1839; and Jain P, et al. "Noble Metals on the Nanoscale: Optical and Photothermal Properties and Some Applications in Imaging, Sensing, Biology, and Medicine" Acc Chem Res 41 (2008) 1578-1586. This eliminates the need for wavelength filters and epi-geometry based fluorescent imaging, drastically simplifying the design of the optical hardware in the integrated cytometry platform. In addition to antibody-based recognition of biomarkers, alternative recognition elements such as aptamers or nanobodies can be employed that may be more stable and thus particularly suitable for use in sample preparation cartridges intended for field use or storage under less than ideal conditions.

In certain embodiments, the test sample chambers are configured with filters or micro-apertures that retain cells in the test chamber but pass unbound markers including quantum dots and other soluble and particulate markers.

The imaging cytometry platform disclosed herein is applicable to assessment of relative cell populations in an inexpensive point of care device. A contact imaging cytometer and disposable sample preparation cartridge yield an inexpensive and portable platform for general cell based diagnostic assays. Imaging cytometry and assay detection schemes based on low-cost digital imagers would also enable straightforward development of portable monitoring and diagnostic microsystems that could exploit existing mobile communications infrastructure (which should be accessible to at least 90% of the world's population by 2010) to enable telemedicine and remote monitoring. In one aspect a quantitative imager is provided that includes a solid state LED light source and a solid state sensor CMOS sensor in operable association with a disposable test sample chamber, and further includes a telemedical data transfer capability in which test values, converted into standardized values compared with normal values, are sent to the patient's medical provider and/or medical record.

One example of a needed assay is enumerating CD4+ and CD8+ T-lymphocytes in blood samples. This high potential impact application is a key component in the management of the global AIDS epidemic. The Joint United Nations Programme on HIV/AIDS (UNAIDS) and World Health Organization (WHO) estimate that AIDS has claimed the lives of over 25 million people since December 1981 when HIV/AIDS was first recognized as a new human viral pathogen and syndrome. UNAIDS/WHO also estimate that approximately 33.2 million people worldwide (0.8% of the world's population) are currently living with HIV and that 2 million people die each year due to AIDS. The epidemic disproportionately affects those in the poorest countries as more than two thirds (68%) of the world's HIV-positive people live in Sub-Saharan Africa and more than three quarters (76%) of all AIDS deaths in 2007 occurred in the region. Additionally, a majority (61%) of people living with HIV in sub-Saharan Africa are women and there are an estimated 11.4 million orphans due to AIDS in the region.

For many, the emergence of antiretroviral therapies (ART) and combination drug treatment regimes has transformed HIV from almost uniformly fatal into a manageable chronic disease. The aim of these therapies is to increase disease-free survival by suppressing viral replication, thereby preserving immunologic function. Deciding on a specific treatment regime requires balancing potential therapeutic effects against the risks of drug toxicity, possible emergence of viral resistance, and recognition that HIV infection is a chronic disease that can require decades of uninterrupted therapy. Initiation and maintenance of antiretroviral therapy must be timed carefully and periodic patient monitoring is needed to endure optimal and sustained efficacy of treatment. Presently, the gold standard indicator of the state of immunologic competence of a patient with HIV infection is the CD4 cell count. The CD4 molecule is a cell surface glycoprotein molecule acting as the MHC class II receptor and generally expressed by, and therefore characteristic of, helper T-cells (a.k.a. effector T cells or Th cells). In contrast, the CD8 molecule is a cell surface glycoprotein molecule acting as the MHC class I receptor and generally expressed by cytotoxic T-cells. In healthy individuals the ratio of CD4+ cells to CD8+ cells is positive, that is, there are more CD4+ cells than CD8+ cells. In HIV infected individuals with active disease, the CD4+ cells are selectively targeted by the virus and seriously decline such that the ratio of CD4+ to CD8+ cells becomes inverted.

Assays based on enumeration of CD4+ T-lymphocytes have grown to be the standard means for deciding when to commence antiretroviral therapy and for monitoring patient response to therapy. Such assays determine an absolute level of CD4+ cells, as a ratio to CD8+ cells, or as a percent of total lymphocytes. As used herein, the CD4 count refers to any of these ways of expressing it. Also, as used herein the terms CD3, CD4 and CD8 refer to the analogous molecules in other mammalian species.

Price reductions in proprietary drugs and the introduction of generic alternatives have made combination ART available for the treatment of AIDS in resource poor countries, but access to CD4+ T-lymphocyte counting has unfortunately remained inadequate as it continues to be cost prohibitive. In many clinics and hospitals in the developing world, donated flow cytometers sit unused as the infrastructure to support them simply does not exist. The present invention provides a solution to this shortcoming with simple, innovative, and robust cytometry systems that enable cell identification and enumeration in spite of the unique operational challenges present in resource limited areas.

In one embodiment, larger numbers of relevant cell populations for analysis are generated by preselection. A sample of anti-coagulated blood, such as for example 0.01 - 10 ml, is collected from the patient and mixed with magnetic beads that have been derivitized with a ligand or antibody that binds the pan T-cell marker CD3. CD3 positive cells are collected by placing the tube in contact with a magnet. With the magnet in place the tube is washed to remove all non-CD3+ cells, including red blood cells and platelets. The magnet is removed and the CD3+ cells remaining in the tube are collected in a small volume and reacted with anti-CD4 and CD8 antibodies that have been derivatized with different quantum dots. The sample is applied to a disposable microfluidic assay chamber and quantified by contact imaging in two colors to provide a measure of the relative ratio of CD4+ and CD8+ T cells. In one embodiment, a field point of care device is provided for cell assessment that includes a planar LED light source, a disposable microfluidic sample chamber and a CMOS contact imager that is readily connected and powered via a USB cable to an inexpensive general purpose computer that provides results contemporaneously. In alternative embodiments, preselection is not employed and the sample is assessed in three colors by staining with anti-CD3, CD4 and CD8. Unlike other proposed systems, this system does not require a microscope for imaging and lacks external fluid motion pumps and pumping systems. *See e.g.* Jokerst, JV et al. "Integration of semiconductor quantum dots into nano-bio-chip systems for enumeration of CD4+ T cell counts at the point-of-need" Lab Chip 8 (2008) 2079-2090.

The availability of assays of this type is a key component in the management of the global AIDS epidemic. The straightforward sample preparation and cell counting system disclosed herein provides essential low-cost diagnosis and monitoring capabilities not only for HIV/AIDS but for additional maladies such as tuberculosis, malaria, or other infectious diseases. Furthermore, such an inexpensive and portable analysis platform improves access to cell-based and general bioassay analyses, enabling therapeutic decisions and monitoring to be performed at the bedside in patient-specific manner either in the clinic or at home. Such capabilities are be ideal for monitoring onset or recurrence of cancer, as well as determining personalized treatment regimes as indicated by the specific biomarker profile of the disease. This assay platform is also applicable to the realization of affordable home-based assay systems, further expanding the breadth of the point-of-care.

### Example 3: Personalized Medicine

There are numerous examples in medicine where selection of a particular drug from the large class of drugs available to treat a particular condition is empirical. For any given drug, efficacy and side effects are essentially averaged over populations of treated patients while the activity of the drug in a given individual in unknown until it is administered. Often different drugs from a class must be serially administered to an individual until a particular drug from the class is identified that is both safe and efficacious in that individual. Individual drug actions cannot be translated from one individual to another. With certain drugs and in certain disease the empirical approach is dangerous and prolongs the period of uncontrolled disease. For example, selection of a safe and effective drug for an individual patient from powerful and potentially dangerous classes of drugs has heretofore been largely empirical. Such drug classes include anti-platelet drugs, statins, anti-depressants, and chemotherapeutic drugs.

Evaluation of Predisposition to Acute Coronary Syndrome: Quantitation of platelet collagen receptor glycoprotein VI (GPVI) has been shown to have predictive value in determining which patients will have an acute coronary syndrome (ACS). Bigalke B et al. "Platelet collagen receptor glycoprotein VI as a possible novel indicator for the acute coronary syndrome" Am Heart J 156(1) (2008) 193-200. Levels of GPVI have been previously determined by FASC analysis with a fluorescent marker for GPVI. In one aspect of the invention, levels of GPVI on platelets is assessed using contact imaging, thus obviating the need for expensive and technically challenging FASC analysis.

Personalized Medicine Relating to Cytochrome P450 Metabolism: Humans have 57 genes and more than 59_{pseudo genes} divided among 18 families of cytochrome P450 genes and 43 subfamilies. CYP2C19 is an important drug-metabolizing enzyme in the cytochrome P450 superfamily (CYP) that catalyzes the biotransformation of many clinically useful drugs including antidepressants, barbituates, proton pump inhibitors, anti-platelet, antimalarial and antitumor drugs. Currently, selection of a given antiplatelet drug is largely empirical and the sensitivity of an individual to a selected agent is unknown prior to treatment. Certain of these drugs have considerable toxicity or are, alternatively, poorly active in some individuals. For example, Clopidogrel (Plavix®) is an anti-platelet drug used to treat coronary heart disease, peripheral vascular disease and cerebrovascular disease. Clopidogrel must be transformed in vivo by cytochrome P450 to be active. It has recently been found that patients with variants in the cytochrome P-450 2C 19 (CYP2C 19) enzyme have lower levels of the active metabolite of clopidogrel, less inhibition of platelets, and a 3.58 times greater risk for major adverse cardiovascular events such as death, heart attack, and stroke. *See* Simon T. et al "Genetic Determinants of Response to Clopidogrel and Cardiovascular Events" NEJM 360 (4) (2009) 363-75. It has been found that there is wide variability in CYP2C19 enzyme metabolism among populations and that people of Asian and African ancestry have a greatly increased prevalence of poor metabolizer status for drugs dependent on CYP metabolism for activity.

Likewise, the activity of antiplatelet drug Warfarin is dependant on Cytochrome P450 2C9 as well as the Vitamin K receptor, VKORC1, which is the site of action of warfarin. Both CYP2C9 and VKORC1 are genetically controlled and greatly affect the half life and time to achieve stable dosing which can vary by 3 - 5 fold between individuals. Currently detection of the subsets of patients having cytochrome P450 variants that affect antiplatelet therapy requires DNA genotyping, a test that is clearly unavailable to most patients.

Platelet activation and aggregation have a central role in both acute coronary syndromes (ACS) and the thrombotic complications that occur after percutaneous coronary intervention (PCI). Thrombotic complications are also a risk in other invasive procedures including trauma surgery, orthopedic surgeries, abdominal surgeries and tumor resections. Activated platelets promote vascular wall inflammation and lead to generation of thrombin and formation of platelet aggregates that obstruct coronary blood flow. Administration of dual antiplatelet therapy with aspirin and clopidogrel bisulfate (Plavix®) to inhibit platelet aggregation has a major role in the treatment of ACS, particularly for prevention of ischemic complications after PCI. However, despite receiving standard dual antiplatelet therapy, up to 20% of patients experience recurrent cardiovascular events, including subacute stent thrombosis and sudden death, after PCI. These events have been attributed to an inadequate antiplatelet drug effect or antiplatelet drug resistance. The same holds true for non-cardiac postoperative thromboembolic complications.

Clopidogrel selectively inhibits the binding of adenosine diphosphate (ADP) to its platelet receptor and the subsequent ADP-mediated activation of the glycoprotein GPIIb/IIIa complex, thereby inhibiting platelet aggregation. The active metabolite of clopidogrel irreversibly modifies the platelet ADP receptor such that platelets exposed to clopidogrel are affected for the remainder of their lifespan. Clopidogrel also blocks the amplification of platelet activation by released ADP and thus inhibits platelet aggregation induced by agonists other than ADP. Biotransformation of clopidogrel is necessary to produce inhibition of platelet aggregation and poor metabolizers of clopidogrel, including due to mutations in CYP2C19, are not able to fully realize the beneficial effect of the drug in the inhibition of platelet aggregation. Research efforts have been under taken to measure the effects of warfarin and aspirin on platelet aggregation by light scattering of a laser light directed on a cuvettes of platelet-rich plasma (PRP) collected before and after treatment. Kawahito K. et al. "Platelet aggregation in patients taking anticoagulants after valvular surgery: evaluation by a laser light-scattering method" J Artif Organs 5 (2002) 188-192. However, heretofore, a simple point of care assay for the effectiveness of anticoagulation has not been available.

The present invention provides a solution to the aforementioned problems by providing a simple and inexpensive assay for responsiveness of a given individual to drugs dependent on members of the cytochrome P-450 super family for activity. Clopidogrel is rapidly absorbed after oral administration of repeated doses of 75 mg clopidogrel (base), with peak plasma levels (3 mg/L) of the main circulating metabolite occurring approximately 1 hour after dosing. Dose dependent inhibition of platelet aggregation can be seen 2 hours after single oral doses of Plavix®. Repeated doses of 75 mg PLAVIX per day inhibit ADP-induced platelet aggregation on the first day, and inhibition reaches steady state between Day 3 and Day 7. At steady state, the average inhibition level observed with a dose of 75 mg PLAVIX per day was between 40% and 60%.

In one aspect, levels of platelet aggregation are assessed using contact imaging or other optical analysis with an integrated light source early in treatment to assess whether types and levels of drug therapy need to be changed until platelet activation is controlled. For example, in one aspect, a patient to be treated with clopidogrel provides a blood sample and a platelet-rich plasma (PRP) fraction is collected as a control and analyzed immediately or stored for later analysis. The patient is then administered a presumably relevant dose of clopidogrel with or without aspirin. After two hours, a blood sample is taken and a PRP fraction isolated and introduced into to a multichamber test chamber of a contact imaging optical analysis device along side the control pretreatment platelets. A platelet aggregating agent such as collagen or ADP is added to the chambers and the degree of aggregation is measured to determine whether the drug is being effectively metabolized and that the drug dosing is adequate. If desired, repeated measurements over time can be made in the same test apparatus dedicated to the individual patient by using a disposable or multi-chamber analysis chamber, or by rinsing the chamber between uses.

Individualized Selection of Chemotherapeutic Drugs: Currently, selection of a given chemotherapeutic drug is largely empirical and the sensitivity of an individual's cancer cells to a selected chemotherapeutic agent is unknown prior to treatment. A solution to this problem is undergoing clinical trials by DiaTech Oncology. The solution was developed by a team at Vanderbilt University and involves a so called "microculture kinetic assay" or MiCK assay wherein tumor cells of an individual patient are exposed to multiple therapeutic doses of several chemotherapeutic drugs. *See* U.S. Patent Nos. 6,077,684 and 6,258,553. In the MiCK assay, a drug sensitivity profile of the patient's tumor cells is calculated by determining the amount of cell membrane blebbing induced by the agent as measured by changes in optical density in small populations of cells plated in microtiter plates. When the MiCK assay was developed it was validated by comparison with an Annexin V binding assay for apoptosis by FACS analysis. Annexin V is a calcium-dependent phospholipid-binding protein with high affinity for phosphatidylserine. Early in the apoptosis process, cells become capable of binding Annexin V due to loss of the plasma membrane phospholipid asymmetry, which causes phosphatidylserine to be exposed on the outer plasma membrane leaflet. As acknowledged by the developers of the MiCK assay, translocation of phosphatidylserine in the cell membrane, detectable by Annexin V binding, may precede or coincide with the cell membrane blebbing. VD Kravtsov, et al. "Use of the Microculture Kinetic Assay of Apoptosis to Determine Chemosensitivities of Leukemias" Blood 92 (1998) 968-980. In one embodiment of the present invention, tumor cells are isolated from a patient and equal number of cells are segregated into individual wells or troughs of a multiwall test sample preparation chamber. The different wells are exposed to different chemotherapeutic agents for a test period. The chemotherapeutic agents are drained from the chamber and fluorescent labeled Annexin V is added to determine the relative induction of apoptosis by the various chemotherapeutic agents. After draining the unbound Annexin V, fluorescence is measured and the relative drug sensitivity of the tumor cells is determined without need for FACS analysis.

In other embodiments, fluorescent substrates for the activity of caspases and other enzymes involved in apoptosis are added to the tumour cells after treatment with chemotherapeutic agents. Fluorogenic and fluorescent reporter molecules have been developed that detect the activity of apoptosis related enzymes including for example aminopeptidases and caspases. *See* U.S. Patent No. 7,270,801. However, heretofore the cleavage of these fluorescent substrates has been measured by a spectrophotometer or with a microscope activity, both of which are expensive instruments. In accordance with one aspect of the present invention, the action of caspases and other enzymes involved in apoptosis upon fluorescent substrates for such enzymes is measured by contact imaging of a disposable microfluidic test chamber, thus obviating the need for expensive readout instruments that make such testing unavailable to much of the world's population. By selecting the chemotherapeutic drug must active against the individual patient's cancer cells, the patient is able to be treated in the first instance with the drugs most likely to produce remission. Given that tumor cells often continue to develop mutations and increase in virulence with time, early selection of the best chemotherapeutic agent improves the likelihood of a cure.

### Example 4: Point-of-Care Cytometry

Recent research in the inventor's laboratories has proven that a mixture of multi-potent, early mesenchymal, multi-potent, lineage committed and lineage uncommitted stem/progenitor cells and fully differentiated cells can be obtained from many body tissue areas. The early mesenchymal uncommitted cells originate from the microvessels within the tissues. For practical reasons, adipose tissue is a source that is available in most animal and human species without disrupting the physiological functions of the body. When the connective tissue of adipose tissue is digested, such as with collagenase, the lipid containing adipocytes can be separated from the other cell types. In 1964, Rodbell reported the use of collagenase to dissociate adipose tissue into a cellular suspension that could then be fractionated by centrifugation into an upper, lipid-filled adipocyte fraction, and a cell pellet comprised of non lipid-filled cells. The pelleted non-adipocyte fraction of cells isolated from adipose tissue by enzyme digestion has been termed the "stromal vascular cell" or SVF population. (Rodbell M. "Metabolism of isolated fat cells: Effects of hormones on glucose metabolism and lipolysis" J Biol Chem. 239 (1964) 375-380).

Adipocytes have been traditionally separated from the SVF by centrifugation wherein the adipocytes float and the cells of the SVF pellet. Typically however, the SVF is subject to further processing and selection, including plastic adherence. In 2005, the International Society for Cellular Therapy (ISCT) stated that the currently recommended term for plastic-adherent cells isolated from bone marrow and other tissues is multipotent mesenchymal stromal cells (MSC) in lieu of the prior "stem cell" term. *See* Dominici et al, Cytotherapy 8 (2006) 315. In accordance with the position paper, MSC must exhibit:
1) adherence to plastic in standard culture conditions using tissue culture flasks;
2) a specific surface antigen (Ag) phenotype as follows:
   positive (≥ 95% +) for CD105 (endoglin, formerly identified by MoAb SH2), CD73 (ecto 5'nucleotidase, formerly identified by binding of MoAbs SH3 and SH4), CD90 (Thy-1), and
   negative (≤ 2% +) for CD14 or Ch11b (monocyte and macrophage marker), CD34 (primitive hematopoietic progenitor and endothelial cell marker), CD45 (pan-leukocyte marker), CD79α, or CD19 (B cells), and HLA-DR (unless stimulated with IFN-y); and
3) tri-lineage mesenchymal differentiation capacity: able to differentiate in vitro into osteoblasts, adipocytes and chondrocytes in inductive media.

Cells from the stromal vascular fraction of adipose tissue that have been subject to plastic adherence are typically referred to as cultured stromal vascular cells or "adipose tissue-derived stromal cells" (ADSC). Mesenchymal stromal cells have been classically isolated from adipose tissue using enzymatic digestion, centrifugation to remove lipid filled cells and plastic adherence with culture in vitro. These cells show a fibroblast-like morphology. Although the cells are initially heterogeneous, the phenotype of population changes in culture including loss of CD31+, CD34+, CD45+ cells, and an increase in CD105 and other cell adhesion type molecules. Generally, < 10% of the cells express markers associated with stemness (e.g., CXCR4, sca-1, SSEA-4) and a substantial fraction differentiates into adipocytes in inductive media. A lesser fraction differentiates into other lineages (bone, cartilage, nerve) in inductive media.

In contrast to prior isolation methods, the certain of the present inventors have developed or participated in the development of methods for isolation of reparative cell populations without the use of centrifugation or plastic adherence, and which are suitable for use at the point of care. According to these methods a sample of donor adipose tissue is enzymatically dissociated into individual cells and small clusters of cells by recirculated passage over a digestion mesh or dissociation filter until the dissociated cells and clusters of cells are reduced in diameter to about 1000 microns or less. The dissociated cells are ultimately phase separated into an aqueous cellular layer and a lipid layer without centrifugation, and cells for cell transplantation are collected from the aqueous cellular layer in a point-of-care device.

In comparing the cells isolated as briefly disclosed above with mesenchymal stromal cells isolated using centrifugation and plastic adherence in accordance with conventional preparation methods, several notable differences are apparent. The reparative cell population isolated as disclosed herein without centrifugation or plastic adherence is also a heterogenous population and generally < 10% express markers associated with stemness (e.g., CXCR4, Sca-1, SSEA-1, SSEA-4, VEGFr2, CD117, CD146, Oct4). However, a substantial fraction of the early multipotent stem cells are not plastic adherent. Importantly, a substantial fraction of cells expressing markers of stemness, endothelial cell lineages and/or exhibiting a small diameter (≤ 6mm) are not adherent and are lost using conventional isolation methods that rely on plastic adherence or centrifugation.

Regardless of the preparation method, cells isolated and purified at the point of care should be characterized to insure that the isolated cell populations exhibit expected numbers of cells of various types, including to insure that the isolation procedure performed as expected. Heretofore such analysis would have to be conducted by distant FACS analysis with all of its attendant shortcomings and delays. Thus, in one embodiment of the invention, a point-of-care cytometer is provided that includes a solid state light source, a disposable microfluidic sample chamber and a solid state contact imager that is readily connected and powered via a USB cable to an inexpensive general purpose computer that provides results contemporaneously. A multichambered test sample chamber may be employed for semi-quantitative assessment using a panel of reagents to determine cell populations on the basis of cell surface and internal proteins. The panel may include a selection of markers that may vary depending on the indication. For example a subset of markers drawn from the following list might be employed: CD31 (endothelial cells); CD34 (primitive hematopoetic progenitors and endothelial cells); CD 44 (marker of activated B cells); CD 45 (Pan-leukocyte marker); CD71 (transferrin receptor present on all actively proliferating cells); CD73 (ecto-5'-nucleotidase, present on B and T cell subsets, endothelial cells, follicular dendritic cells, epithelial cells); CD90 (immature hematopoietic stem cells); CD105 (activated monocytes and erythroid precursors in marrow); CD117 (c-kit, stem cell factor receptor); CD146 (melanoma cell adhesion molecule (MEL-CAM), present on vascular smooth muscle and endothelium); SSEA-4 (Stage specific embryonic antigen 4); Sca-1 (Stem cell antigen 1, expressed by stem/progenitor cells from a variety of tissues); and Oct4 (marker of undifferentiated stem cells). Other panels can be readily envisioned by those of skill in the art and further markers may be identified. Through use of the microfluidic imaging system described herein, the isolated cells are characterized at the point of care in a manner that consumes very few of the isolated cells for analysis.

While this invention has been described with reference to illustrative embodiments, this description is not intended to be construed in a limiting sense. Various modifications and combinations of illustrative embodiments, as well as other embodiments of the invention, will be apparent to persons skilled in the art upon reference to the description. It is therefore intended that the appended claims encompass such modifications and enhancements and that the invention be limited only by the appended claims and the rules and principles of applicable law.

## Claims

1. An optical detection platform for assays comprising:
a planar LED disposed in a fixed array with a solid state light sensor(14); and
a microfluidic sample chamber (26), wherein the sample chamber (26) is adapted to contain a sample and is positioned to receive input light from the LED and permit output light from the sample in the chamber (26) to be conveyed to the solid state light sensor (14) that collects the light and generates signals that are conveyed to a data analysis module via, contact imaging.

2. The optical detection platform of claim 1, wherein the solid state light sensor (14) is a CMOS image sensor.

3. The optical detection platform of claim 1, further comprising at least one optical filter (32, 34).

4. The optical detection platform of claim 1, wherein the signals define a power spectrum and frequency or luminescence spectrum of the light received by the light sensor to provide for quantitation of assays conducted in the microfluidic sample chamber (26).

5. The optical detection platform of claim. 1, wherein the platform further comprises at least cne planar microlens array.

6. The optical detection platform of claim 1, wherein the microfluidic sample chamber (26) is multichambered or disposable.

7. A method of performing a quantitative assay in an optical analyzer that comprises a microfluidic sample chamber (26) in operable communication with a solid state light source (40, 42, 44) and a solid state light sensor (14) comprising:
loading a sample into the microfluidic sample chamber (26) ;
illuminating the sample with an input light from the solid state light source (40, 42, 44);
collecting an output light originating from the sample with the solid state light sensor (14); and
analyzing one or more parameters of the output light to quantitate characteristics of the sample, wherein the solid state light source (40, 42, 44) is a planar LED and the optical analyzer is the optical detection platform according to claim 1.

8. The method of claim 7, wherein the solid state light sensor (14) is a CMOS image sensor.

9. The method of claim 7, wherein the sample comprises eukaryotic or prokaryotic cells and one or more of the cells are labeled with a quantum dot or other optical reporter.

10. The method of any one of claims 7 through 9, wherein, the optical analyzer is a hand-held analyzer and the solid state light source (40, 42, 44) and the solid state light sensor (14) are powered and controlled by a combined power and data control cable.

11. The method of claim 9, wherein the analyzing is based on a measurement of a power spectrum of light emitted by the quantum dot or other optical reporter upon excitation by the input light.

12. A method of performing a quantitative assay in an optical analyzer that comprises a microfluidic sample chamber (26) in operable communication with a planar LED and a CMOS image sensor (14) comprising:
providing at least one quantum dot or other optical reporter conjugated antibody that is specific for a cell marker;
loading a sample into the microfluidic sample chamber (26), wherein the sample comprises a population of mammalian cells that has been reacted with the at least one quantum dot or other optical reporter conjugated antibody;
illuminating the sample with an input light from the planar LED;
collecting an output light originating from the Sample with the CMOS image sensor (14); and
analyzing one or more parameters of the output light to quantitate the cell marker in the sample, wherein the optical analyzer is the optical detection platform according to claim 1.

13. The method of claim 12, wherein the cell marker is a tumor cell marker, a stem cell marker, a pathogen marker, or a T cell marker and the method is performed to determine a CD4 count.

14. A method of assessing a physiologic condition of a patient using an optical detection platform according to claim 1 that comprises a microfluidic sample chamber (26) in operable communication whith a planar LED light source (40, 42, 44) that is disposed in a fixed stack array with the CMOS image sensor (14) comprising:
loading a biological sample from the patient in the microfluidic sample chamber (26);
illuminating the sample with an input light from the planar solid state LED;
collecting an output light originating from the sample with the CMOS image sensor (14); and
analyzing one or more parameters of the output light to quantitate characteristics of the sample of the patient.

15. The method of any one claim 14, wherein the disposable microfluidic sample chamber (26) has a sample volume of less than 100 microliters.

## Patentansprüche

1. Aufbau zur optischen Erfassung für Untersuchungen, umfassend:
eine in einer festen Anordnung mit einem Festkörperlichtsensor (14) angeordnete Flächen-LED; und
eine Mikrofluidikprobenkammer (26), wobei die Probenkammer (26) geeignet ist, eine Probe zu enthalten, und angeordnet ist, eingebrachtes Licht von der LED zu empfangen und zu erlauben, dass ausgegebenes Licht von der Probe in der Kammer (26) mittels Kontaktbildgebung zum Festkörperlichtsensor (14) geleitet wird, welcher das Licht sammelt und Signale erzeugt, welche zu einem Datenanalysemodul geleitet werden.

2. Aufbau zur optischen Erfassung nach Anspruch 1, wobei der Festkörperlichtsensor (14) ein CMOS-Bildsensor ist.

3. Aufbau zur optischen Erfassung nach Anspruch 1, weiterhin umfassend zumindest einen optischen Filter (32, 34).

4. Aufbau zur optischen Erfassung nach Anspruch 1, wobei die Signale ein Leistungsspektrum und Frequenz- oder Lumineszenzspektrum des durch den Lichtsensor empfangenen Lichts definieren, um eine Quantifizierung von in der Mikrofluidikprobenkammer (26) durchgeführten Untersuchungen vorzusehen.

5. Aufbau zur optischen Erfassung nach Anspruch 1, wobei der Aufbau weiterhin zumindest eine planare Mikrolinsenanordnung umfasst.

6. Aufbau zur optischen Erfassung nach Anspruch 1, wobei die Mikrofluidikprobenkammer (26) mehrkammerig oder zur einmaligen Verwendung vorgesehen ist.

7. Verfahren zur Durchführung einer quantitativen Untersuchung in einem optischen Analysator, welcher eine Mikrofluidikprobenkammer (26) in funktionierender Kommunikation mit einer Festkörperlichtquelle (40, 42, 44) und einem Festkörperlichtsensor (14) umfasst, umfassend:
Einbringen einer Probe in die Mikrofluidikprobenkammer (26);
Beleuchten der Probe mit einem eingebrachten Licht von der Festkörperlichtquelle (40, 42, 44);
Sammeln eines ausgegebenen Lichts, welches von der Probe stammt, mit dem Festköperlichtsensor (14); und
Analysieren eines oder mehrerer Parameter des ausgegebenen Lichts, um Charakteristika der Probe zu quantifizieren, wobei die Festkörperlichtquelle (40, 42, 44) eine Flächen-LED ist und der optische Analysator der Aufbau zur optischen Erfassung nach Anspruch 1 ist.

8. Verfahren nach Anspruch 7, wobei der Festkörperlichtsensor (14) ein CMOS-Bildsensor ist.

9. Verfahren nach Anspruch 7, wobei die Probe eukaryotische und prokaryotische Zellen umfasst, und eine oder mehrere der Zellen mit einem Quantenpunkt oder einer anderen optischen Markierung gekennzeichnet sind.

10. Verfahren nach einem der Ansprüche 7 bis 9, wobei der optische Analysator ein tragbarer Analysator ist, und die Festkörperlichtquelle (40, 42, 44) und der Festkörperlichtsensor (14) durch ein kombiniertes Strom- und Datensteuerkabel versorgt und gesteuert werden.

11. Verfahren nach Anspruch 9, wobei die Analyse auf einer Messung eines Leistungsspektrums von durch den Quantenpunkt oder die andere optische Markierung nach Anregung durch das eingebrachte Licht emittiertem Licht gestützt ist.

12. Verfahren zur Durchführung einer quantitativen Untersuchung in einem optischen Analysator, welcher eine Mikrofluidikprobenkammer (26) in funktionierender Kommunikation mit einer Flächen-LED und einem CMOS-Bildsensor (14) umfasst, umfassend:
Bereitstellen zumindest eines für einen Zellmarker spezifischen Antikörpers, welcher mit einem Quantenpunkt oder einer anderen optischen Markierung konjugiert ist;
Einbringen einer Probe in die Mikrofluidikprobenkammer (26), wobei die Probe eine Population von Säugetierzellen umfasst, welche mit dem zumindest einem Antikörper, welcher mit dem Quantenpunkt oder der anderen optischen Markierung konjugiert ist, reagiert hat;
Beleuchten der Probe mit einem eingebrachten Licht von der Flächen-LED;
Sammeln eines ausgegebenen Lichts, welches von der Probe stammt, mit dem CMOS-Bildsensor (14); und
Analysieren eines oder mehrerer Parameter des ausgegebenen Lichts, um den Zellmarker in der Probe zu quantifizieren, wobei der optische Analysator der Aufbau zur optischen Erfassung nach Anspruch 1 ist.

13. Verfahren nach Anspruch 12, wobei der Zellmarker ein Tumorzellmarker, ein Stammzellmarker, ein Krankheitserregermarker oder ein T-Zellmarker ist, und das Verfahren durchgeführt wird, um eine CD4-Zahl zu bestimmen.

14. Verfahren zur Bewertung eines physiologischen Zustands eines Patienten unter Verwendung eines Aufbaus zur optischen Erfassung nach Anspruch 1, welcher eine Mikrofluidikprobenkammer (26) in funktionierender Kommunikation mit einer Flächen-LED-Lichtquelle (40, 42, 44) umfasst, welche in einer festen Stapelanordnung mit dem CMOS-Bildsensor (14) angeordnet ist, umfassend:
Einbringen einer biologischen Probe vom Patienten in die Mikrofluidikprobenkammer (26);
Beleuchten der Probe mit einem eingebrachten Licht von der Flächen-Festkörper-LED;
Sammeln eines ausgegebenen Lichts, welches von der Probe stammt, mit dem CMOS-Bildsensor (14); und
Analysieren eines oder mehrerer Parameter des ausgegebenen Lichts, um Charakteristika der Probe des Patienten zu quantifizieren.

15. Verfahren nach jedem Anspruch 14, wobei die Einweg-Mikrofluidikprobenkammer (26) ein Probenvolumen von weniger als 100 Mikroliter aufweist.

## Revendications

1. Plate-forme de détection optique pour dosages comprenant:
une LED planaire disposée dans une matrice fixe avec un capteur lumineux à l'état solide (14); et
une chambre d'échantillon microfluidique (26), dans laquelle la chambre d'échantillon (26) est adaptée à contenir un échantillon et est positionnée pour recevoir de la lumière d'entrée provenant de la LED et permettre à de la lumière de sortie de l'échantillon dans la chambre (26) d'être transportée vers le capteur lumineux à l'état solide (14), qui recueille la lumière et génère des signaux qui sont transportés vers un module d'analyse de données, par le biais d'une imagerie de contact.

2. Plate-forme de détection optique selon la revendication 1, dans laquelle le capteur lumineux à l'état solide (14) est un capteur d'image CMOS.

3. Plate-forme de détection optique selon la revendication 1, comprenant en outre au moins un filtre optique (32, 34).

4. Plate-forme de détection optique selon la revendication 1, dans laquelle les signaux définissent un spectre de puissance et un spectre de fréquence ou de luminescence de la lumière reçue par le capteur lumineux pour fournir une quantification de dosages réalisés dans la chambre d'échantillon microfluidique (26).

5. Plate-forme de détection optique selon la revendication 1, dans laquelle la plate-forme comprend en outre au moins une matrice de microlentilles planaires.

6. Plate-forme de détection optique selon la revendication 1, dans laquelle la chambre d'échantillon microfluidique (26) est à chambres multiples ou jetable.

7. Procédé de réalisation d'un dosage quantitatif dans un analyseur optique qui comprend une chambre d'échantillon microfluidique (26) en communication opérationnelle avec une source lumineuse à l'état solide (40, 42, 44) et un capteur lumineux à l'état solide (14) comprenant:
charger un échantillon dans la chambre d'échantillon microfluidique (26);
illuminer l'échantillon avec une lumière d'entrée provenant de la source lumineuse à l'état solide (40, 42, 44);
recueillir une lumière de sortie provenant de l'échantillon avec le capteur lumineux à l'état solide (14); et
analyser un ou plusieurs paramètres de la lumière de sortie pour quantifier des caractéristiques de l'échantillon, dans lequel la source lumineuse à l'état solide (40, 42, 44) est une LED planaire et l'analyseur optique est la plate-forme de détection optique selon la revendication 1.

8. Procédé selon la revendication 7, dans lequel le capteur lumineux à l'état solide (14) est un capteur d'image CMOS.

9. Procédé selon la revendication 7, dans lequel l'échantillon comprend des cellules eucaryotes ou procaryotes et une ou plusieurs des cellules sont marquées avec un point quantique ou autre rapporteur optique.

10. Procédé selon l'une quelconque des revendications 7 à 9, dans lequel l'analyseur optique est un analyseur portable, et la source lumineuse à l'état solide (40, 42, 44) et le capteur lumineux à l'état solide (14) sont alimentés et commandés par un câble d'alimentation et de commande de données combiné.

11. Procédé selon la revendication 9, dans lequel l'analyse se base sur une mesure d'un spectre de puissance de lumière émis par le point quantique ou autre rapporteur optique suite à l'excitation par la lumière d'entrée.

12. Procédé de réalisation d'un dosage quantitatif dans un analyseur optique qui comprend une chambre d'échantillon microfluidique (26) en communication opérationnelle avec une LED planaire et un capteur d'image CMOS (14) comprenant:
fournir au moins un anticorps conjugué à un point quantique ou autre rapporteur optique qui est spécifique à un marqueur cellulaire;
charger un échantillon dans la chambre d'échantillon microfluidique (26), dans lequel l'échantillon comprend une population de cellules mammifères qui a été mise à réagir avec l'au moins un anticorps conjugué à un point quantique ou autre rapporteur optique;
illuminer l'échantillon avec une lumière d'entrée provenant de la LED planaire;
recueillir une lumière de sortie provenant de l'échantillon avec le capteur d'image CMOS (14); et
analyser un ou plusieurs paramètres de la lumière de sortie pour quantifier le marqueur cellulaire dans l'échantillon, dans lequel l'analyseur optique est la plate-forme de détection optique selon la revendication 1.

13. Procédé selon la revendication 12, dans lequel le marqueur cellulaire est un marqueur de cellules tumorales, un marqueur de cellules souches, un marqueur pathogène ou un marqueur de cellules T et le procédé est réalisé pour déterminer un comptage CD4.

14. Procédé d'évaluation d'une condition physiologique d'un patient utilisant une plate-forme de détection optique selon la revendication 1 qui comprend une chambre d'échantillon microfluidique (26) en communication opérationnelle avec une source lumineuse à LED planaire (40, 42, 44) qui est disposée dans une matrice de piles fixe avec le capteur d'image CMOS (14), comprenant:
charger un échantillon biologique provenant du patient dans la chambre d'échantillon microfluidique (26);
illuminer l'échantillon avec une lumière d'entrée provenant de la LED planaire à l'état solide;
recueillir une lumière de sortie provenant de l'échantillon avec le capteur d'image CMOS (14); et
analyser un ou plusieurs paramètres de la lumière de sortie pour quantifier des caractéristiques de l'échantillon du patient.

15. Procédé selon l'une quelconque de la revendication 14, dans lequel la chambre d'échantillon microfluidique jetable (26) possède un volume d'échantillon de moins de 100 microlitres.
